(19) Europäisches Patentamt

European Patent Office

Office européen des brevets

(11) **EP 4 626 043 A1**

(12) **EUROPEAN PATENT APPLICATION**

published in accordance with Art. 153(4) EPC

(43) Date of publication:
**01.10.2025 Bulletin 2025/40**

(21) Application number: **23902806.1**

(22) Date of filing: **14.12.2023**

(51) International Patent Classification (IPC):
**H04W 4/029** (2018.01)

(52) Cooperative Patent Classification (CPC):
**G01S 5/00; H04W 4/02; H04W 4/029**

(86) International application number:
**PCT/CN2023/138929**

(87) International publication number:
**WO 2024/125613 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 CN 202211613780**

(71) Applicant: **Huawei Technologies Co., Ltd.
Shenzhen, Guangdong 518129 (CN)**

(72) Inventors:
• **ZHANG, Jingwei
  Shenzhen, Guangdong 518129 (CN)**

• **CHEN, Ying
  Shenzhen, Guangdong 518129 (CN)**
• **QIAO, Yunfei
  Shenzhen, Guangdong 518129 (CN)**
• **YU, Tianhang
  Shenzhen, Guangdong 518129 (CN)**
• **TIE, Xiaolei
  Shenzhen, Guangdong 518129 (CN)**

(74) Representative: **Maiwald GmbH
Engineering
Elisenhof
Elisenstrasse 3
80335 München (DE)**

(54) **POSITIONING METHOD AND APPARATUS**

(57)     This application provides a positioning method and an apparatus, to implement positioning of a terminal device in an NTN scenario. The positioning method includes: A first access network device receives a first signal and a second signal from a terminal device; and determines a location of the terminal device based on a first receive time difference, a first transmit time difference, and a first location and a second location of the first access network device, where the first receive time difference is a time difference between receive time of the first signal and receive time of the second signal, the first transmit time difference is a time difference between transmit time of the first signal and transmit time of the second signal, the first location of the first access network device is a location at which the first access network device is located when receiving the first signal, and the second location of the first access network device is a location at which the first access network device is located when receiving the second signal.

FIG. 11

**Description**

This application claims priority to Chinese Patent Application No. 202211613780.8, filed with the China National Intellectual Property Administration on December 15, 2022 and entitled "POSITIONING METHOD AND APPARATUS", which is incorporated herein by reference in its entirety.

**TECHNICAL FIELD**

Embodiments of this application relate to the communication field, and in particular, to a positioning method and an apparatus.

**BACKGROUND**

With development of information technologies, compared with a terrestrial communication network, a non-terrestrial network (non-terrestrial network, NTN) featuring wide coverage, no limitation from a geographical environment, and high reliability is widely applied to a plurality of fields such as aviation and energy as an extremely important communication scenario in a 5th generation (5th generation, 5G) mobile communication technology.

Generally, the NTN may provide a communication service for an area that cannot be covered by the terrestrial network or an area that is not fully covered by the terrestrial network; may provide stable emergency communication in a case of a natural disaster or a large-scale sports event; may provide a high-quality communication service for a user on a high-speed railway, a ship, an airplane, or other means of transportation; and may provide a specialized service (for example, a charging service) for a government/enterprise user, to meet a specific service requirement.

However, the NTN usually needs to obtain a location of a terminal device to provide the foregoing communication services such as disaster warning, emergency communication, and the charging service. In view of this, how to obtain the location of the terminal device is a problem to be urgently resolved currently.

**SUMMARY**

This application provides a positioning method and an apparatus, to implement positioning of a terminal device in an NTN scenario.

According to a first aspect, a positioning method is provided. The method may be performed by a first access network device, or may be performed by a component of the first access network device, for example, a processor, a chip, or a chip system of the first access network device, or may be implemented by a logical module or software that can implement all or some functions of the first access network device. The method includes: receiving a first signal and a second signal from a terminal device; and determining a location of the terminal device based on a first receive time difference, a first transmit time difference, and a first location and a second location of the first access network device, where the first receive time difference is a time difference between receive time of the first signal and receive time of the second signal, the first transmit time difference is a time difference between transmit time of the first signal and transmit time of the second signal, the first location of the first access network device is a location at which the first access network device is located when receiving the first signal, and the second location of the first access network device is a location at which the first access network device is located when receiving the second signal.

According to this solution, the first access network device can determine the location of the terminal device based on the receive time of the first signal and the receive time of the second signal, the location at which the first access network device is located when receiving the first signal and the location at which the first access network device is located when receiving the second signal, and the first transmit time difference. The access network device can determine the location of the terminal device without depending on reporting of a timing advance by the terminal device, to avoid reduction in positioning precision caused by the unreliable timing advance reported by the terminal device. In other words, compared with a solution in which positioning is performed based on the timing advance reported by the terminal device, the method can improve the positioning precision.

In a possible design, when the first signal is a random access preamble, the positioning method further includes: receiving the time difference between the transmit time of the first signal and the second signal that are from the terminal device.

In a possible design, the positioning method further includes: receiving time indication information, and a third location and a fourth location of a second access network device from the second access network device. The time indication information indicates a second receive time difference, and the second receive time difference is a time difference between time at which the second access network device receives the first signal and time at which the second access network device receives the second signal. The third location of the second access network device is a location at which the second access network device is located when receiving the first signal, and the fourth location of the second access network device is a location at which the second access network device is located when receiving the second signal.

In a possible design, the time indication information includes the second receive time difference; or the time indication information includes the time at which the second access network device receives the first signal and the time at which the second access network device receives the second signal.

In a possible design, before receiving, from the second access network device, the time indication information, and the third location and the fourth location of the second access network device, the positioning method further includes: sending related information of the terminal device to the second access network device. The related information is used to determine a receive time window of the first signal and a receive time window of the second signal.

In a possible design, the related information includes at least one of resource information, identification information of a cell in which the terminal device is located, or type information of the first signal and the second signal. The resource information indicates a time-frequency resource on which the first signal is located and/or a time-frequency resource on which the second signal is located.

In a possible design, before receiving the first signal and the second signal from the terminal device, the positioning method further includes: sending first indication information to the terminal device. The first indication information indicates a first timing advance and/or a second timing advance.

In a possible design, determining the location of the terminal device based on the first receive time difference, the first transmit time difference, and the first location and the second location of the first access network device includes: determining the location of the terminal device based on the first receive time difference, the first transmit time difference, the first location of the first access network device, the second location of the first access network device, and an advance difference.

In a possible design, before determining the location of the terminal device based on the first receive time difference, the first transmit time difference, and the first location and the second location of the first access network device, the positioning method further includes: receiving the advance difference from the terminal device. The advance difference is a difference between the first timing advance and the second timing advance.

In a possible design, the positioning method further includes: determining the advance difference based on the first signal and the second signal. The second signal is a signal obtained by performing cyclic shift on the first signal.

In a possible design, determining the advance difference based on the first signal and the second signal includes: determining a step size of the cyclic shift based on the first signal and the second signal, and determining the advance difference based on the step size.

According to this optional solution, when the first timing advance is different from the second timing advance, the first receive time difference may include the difference between the first timing advance and the second timing advance. In this case, the terminal device needs to directly or indirectly report the difference between the first timing advance and the second timing advance to the first access network device, to prevent precision of the location of the terminal device that is subsequently determined by directly using the first receive time difference from being reduced because the difference between the first timing advance and the second timing advance is not subtracted from the first receive time difference.

In a possible design, determining the location of the terminal device based on the first receive time difference, the first transmit time difference, and the first location and the second location of the first access network device includes: determining the location of the terminal device based on the first receive time difference, the first transmit time difference, the first location of the first access network device, the second location of the first access network device, the second receive time difference, the third location of the second access network device, and the fourth location of the second access network device.

In a possible design, determining the location of the terminal device based on the first receive time difference, the first transmit time difference, and the first location and the second location of the first access network device includes: determining the location of the terminal device based on the first receive time difference, the first transmit time difference, the first location of the first access network device, the second location of the first access network device, the second receive time difference, the third location of the second access network device, the fourth location of the second access network device, and the advance difference.

According to this optional solution, a plurality of access network devices may participate in positioning of the terminal device. Compared with a solution in which a single access network device performs positioning of the terminal device, this solution can reduce a quantity of times that the terminal device sends a signal, to reduce a positioning delay and improve positioning efficiency.

According to a second aspect, a positioning method is provided. The method may be performed by a terminal device, may be performed by a component of the terminal device, for example, a processor, a chip, or a chip system of the terminal device, or may be implemented by a logical module or software that can implement all or some functions of the terminal device. The method includes: sending a first signal to a first access network device by using a first timing advance; and sending a second signal to the first access network device by using a second timing advance, where the first signal and the second signal are used to determine a location of the terminal device.

According to this solution, the terminal device can determine the location of the terminal device by sending the first signal and the second signal to the access network device. There is no need to report a timing advance to the first access network device, to avoid reduced precision caused by an unreliable timing advance reported. In other words, the positioning precision can be increased in comparison with a solution in which positioning is performed on the terminal device by reporting the timing advance.

In a possible design, before sending the first signal to the first access network device by using the first timing advance, the positioning method may further include: receiving first indication information from the first access network device. The first indication information indicates the first timing advance and/or the second timing advance.

In a possible design, the positioning method may further include: sending an advance difference to the first access network device, where the advance difference is a difference between the first timing advance and the second timing advance.

In a possible design, before sending the first signal to the first access network device by using the first timing advance, the positioning method may further include: performing cyclic shift on the first signal based on the advance difference, to obtain the second signal. That is, the second signal is a signal obtained by performing cyclic shift on the first signal.

In a possible design, the method may further include: sending the first signal to a second access network device by using the first timing advance; and sending the second signal to the second access network device by using the second timing advance.

In a possible design, when the first signal is a random access preamble, the positioning method further includes: sending a time difference between transmit time of the first signal and transmit time of the second signal to the first access network device.

In a possible design, the first signal and the second signal are not simultaneously sent, in other words, there is a time interval between the transmit time of the first signal and the transmit time of the second signal. Actually, the terminal device sends the first signal only once, and sends the second signal only once.

For technical effects brought by any possible design of the second aspect, refer to technical effects brought by a corresponding design of the first aspect. Details are not described herein again.

With reference to the first aspect or the second aspect, in a possible design, the first timing advance is the same as the second timing advance.

With reference to the first aspect or the second aspect, in a possible design, the first timing advance is different from the second timing advance.

With reference to the first aspect or the second aspect, in a possible design, that the first indication information indicates the first timing advance and/or the second timing advance may include: The first indication information indicates that the first timing advance is the same as or different from the second timing advance.

With reference to the first aspect or the second aspect, in a possible design, that the first indication information indicates the first timing advance and/or the second timing advance may further include: The first indication information indicates a value of the first timing advance and a value of the second timing advance.

With reference to the first aspect or the second aspect, in a possible design, the first indication information may be carried in at least one of downlink control information (downlink control information, DCI), a medium access control-control element (medium access control-control element, MAC-CE), or a radio resource control (radio resource control, RRC) message.

With reference to the first aspect or the second aspect, in a possible design, a type of the first signal and/or the second signal includes but is not limited to a sounding reference signal (sounding reference signal, SRS), a demodulation reference signal (demodulation reference signal, DMRS), or a preamble (preamble).

With reference to the first aspect or the second aspect, in a possible design, when the first signal is a preamble, the preamble may be a random access preamble in a random access procedure.

With reference to the first aspect or the second aspect, in a possible design, when the first signal is a random access preamble in a random access procedure, the first indication information may indicate that a timing advance corresponding to a sending moment of the first signal of the terminal device is used as the first timing advance.

With reference to the first aspect or the second aspect, in a possible design, the first signal and the second signal are of a same type or different types.

According to a third aspect, a communication apparatus is provided, to implement the methods. The communication apparatus may be the first access network device in the first aspect, or an apparatus included in the first access network device, for example, a chip or a chip system; or the communication apparatus may be the terminal device in the second aspect, or an apparatus included in the terminal device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any one of the possible implementations of the foregoing aspects. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver machine, a transceiver, or a communication interface.

According to a fourth aspect, a communication apparatus is provided, including a processor and a memory. The memory is configured to store computer instructions, and when the processor executes the instructions, the communication apparatus is enabled to perform the method according to any one of the foregoing aspects. The communication apparatus may be the first access network device in the first aspect, or an apparatus included in the first access network device, for example, a chip or a chip system; or the communication apparatus may be the terminal device in the second aspect, or an apparatus included in the terminal device, for example, a chip or a chip system.

According to a fifth aspect, a communication apparatus is provided, including a processor and a communication interface. The communication interface is configured to communicate with a module other than the communication apparatus, and the processor is configured to execute a computer program or instructions, to enable the communication apparatus to perform the method according to any one of the foregoing aspects. The communication apparatus may be the first access network device in the first aspect, or an apparatus included in the first access network device, for example, a chip or a chip system; or the communication apparatus may be the terminal device in the second aspect, or an apparatus included in the terminal device, for example, a chip or a chip system.

According to a sixth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first access network device in the first aspect, or an apparatus included in the first access network device, for example, a chip or a chip system; or the communication apparatus may be the terminal device in the second aspect, or an apparatus included in the terminal device, for example, a chip or a chip system.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that when the communication apparatus provided in any one of the third aspect to the sixth aspect is a chip, a sending action/function of the communication apparatus may be understood as output information, and a receiving action/function of the communication apparatus may be understood as input information.

According to a seventh aspect, a computer-readable storage medium is provided. The computer-readable storage medium stores a computer program or instructions. When the computer program or instructions are run on a communication apparatus, the communication apparatus is enabled to perform the method according to any one of the foregoing aspects.

According to an eighth aspect, a computer program product including instructions is provided. When the computer program product is run on a communication apparatus, the communication apparatus is enabled to perform the method according to any one of the foregoing aspects.

For technical effects brought by any design of the third aspect to the eighth aspect, refer to technical effects brought by different designs of the first aspect or the second aspect. Details are not described herein again.

**BRIEF DESCRIPTION OF DRAWINGS**

FIG. 1 is a schematic flowchart of a positioning method according to this application;
FIG. 2 is a schematic flowchart of another positioning method according to this application;
FIG. 3 is a schematic flowchart of another positioning method according to this application;
FIG. 4 is a schematic flowchart of another positioning method according to this application;
FIG. 5 is a schematic flowchart of another positioning method according to this application;
FIG. 6 is a diagram of a structure of a communication system according to this application;
FIG. 7 is a diagram of a structure of a non-terrestrial network according to this application;
FIG. 8 is a diagram of another structure of a non-terrestrial network according to this application;
FIG. 9 is a diagram of still another structure of a non-terrestrial network according to this application;
FIG. 10 is a diagram of a structure of a communication apparatus according to this application;
FIG. 11 is a schematic flowchart of a positioning method according to this application;

FIG. 12 is a schematic flowchart of another positioning method according to this application;
FIG. 13a is a schematic flowchart of another positioning method according to this application;
FIG. 13b is a schematic flowchart of another positioning method according to this application;
FIG. 14 is a schematic flowchart of another positioning method according to this application;
FIG. 15 is a schematic flowchart of another positioning method according to this application;
FIG. 16 is a diagram of a structure of another communication apparatus according to this application; and
FIG. 17 is a diagram of a structure of still another communication apparatus according to this application.

## DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

For ease of understanding of the technical solutions in embodiments of this application, related technologies of this application are first briefly described below.

1. Non-terrestrial network (non-terrestrial network, NTN)

With development of communication requirements, a 5th generation (5th generation, 5G) network and a future evolved network not only need to meet a plurality of service requirements, but also need to provide wider service coverage. The NTN is less affected by geographical conditions, can achieve global coverage, and is an important direction of future communication development.

Compared with a conventional terrestrial network, the NTN participates in network deployment by using a typical flight platform (for example, an airplane or an uncrewed aerial vehicle) or satellite. For example, a base station or some functions of the base station are deployed on the flight platform or the satellite to provide coverage for a terminal device, or the flight platform or the satellite is used as a relay to forward a signal of a terrestrial base station to provide coverage for a terminal device.

The NTN may provide a communication service for an area that cannot be covered by the terrestrial network or an area that is not fully covered by the terrestrial network; may provide stable emergency communication in a case of a natural disaster or a large-scale sports event; may provide a high-quality communication service for a user on a high-speed railway, a ship, an airplane, or other means of transportation; and may provide a dedicated service (for example, a charging service) for a government/enterprise user, to meet a specific service requirement.

2. Timing advance (timing advance, TA)

In the NTN, a distance between the terminal device and the satellite or the flight platform is long. In this case, round-trip time during process communication between the terminal device and the base station mounted on the satellite or the flight platform is long. Long round-trip time affects communication performance. In view of this, the TA is proposed in the industry. The terminal device may send an uplink signal in advance based on the TA.

In the NTN, ephemeris information of the satellite or flight information of the flight platform (for example, a location, speed, and flight orbit of the flight platform) plays a very important role in communication. Using satellite communication as an example, the terminal device may determine an end-to-end delay from the terminal device to the base station based on the ephemeris information of the satellite, a location of the terminal device, and information about a delay from the satellite to a satellite gateway. Therefore, TA pre-compensation is performed based on the end-to-end delay (that is, the uplink signal is sent in advance).

Because a location of the satellite or the location of the flight platform changes in real time, the distance between the satellite or the flight platform and the terminal device changes accordingly. In this case, the terminal device may need to determine the TA in real time. In other words, a TA determined by the terminal device at a different moment varies with a location of the satellite or the flight platform at a different moment.

3. Positioning of the terminal device in the terrestrial network

In a possible implementation, the terminal device sends sounding reference signals (sounding reference signals, SRSs) to a plurality of access network devices, and each access network device reports time of arrival (time of arrival, TOA) or relative time of arrival (relative time of arrival, RTOA) of an SRS to a positioning server. The positioning server determines the location of the terminal device based on the TOA or the RTOA.

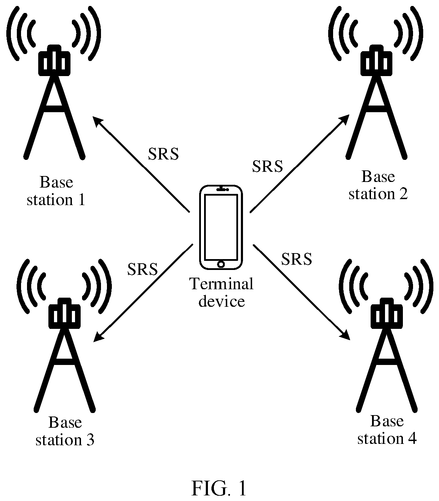

For example, as shown in FIG. 1, base stations are used as the access network devices. The terminal device sends SRSs to a base station 1, a base station 2, a base station 3, and a base station 4. Each base station receives an SRS from the terminal device, records TOA of the SRS, and reports the TOA to the positioning server. The positioning server determines a distance between each base station and the terminal device based on TOA of the base station, to determine the location of the terminal device based on the distance. For example, the positioning server may draw a circle by using the base station 1 as a center and using a distance between the base station 1 and the terminal device as a radius. A point on the circle is a possible location of the terminal device relative to the base station 1. Similarly, the positioning server may determine locations of the terminal device relative to the base station 2, the base station 3, and the base station 4. In this way, the positioning server determines that the terminal device is located in an intersection region of the four circles.

Alternatively, the terminal device sends SRSs to a base station 1, a base station 2, a base station 3, and a base station 4. Each base station receives an SRS from the terminal device, records TOA of the SRS, calculates RTOA between the TOA and TOA of another base station, and reports the RTOA to a positioning server. The positioning server determines a difference between distances between every two of a plurality of base stations and the terminal device based on each RTOA, to determine the location of the terminal device based on the difference. For example, the positioning server may use the base station 1 and the base station 2 as two focal points, and use a difference between a distance between the terminal device and the base station 1 and a distance between the terminal device and the base station 2 as a length of a real axis of a hyperbola. A point on the hyperbola is a possible location of the terminal device relative to the base station 1 and the base station 2. Similarly, the positioning server may determine a location of the terminal device relative to the base station 2 and the base station 3, a location of the terminal device relative to the base station 3 and the base station 4, and a location of the terminal device relative to the base station 1 and the base station 4. In this way, the positioning server determines that the terminal device is located in an intersection region of the four hyperbolas.

In another possible implementation, a plurality of access network devices send positioning reference signals (positioning reference signals, PRSs) to the terminal device, and the terminal device calculates reference signal time differences (reference signal time differences, RSTDs) between TOA of the PRSs of the access network devices based on the TOA of the PRSs of the access network devices, and reports the RSTDs to a positioning server. The positioning server determines the location of the terminal device based on the RSTDs.

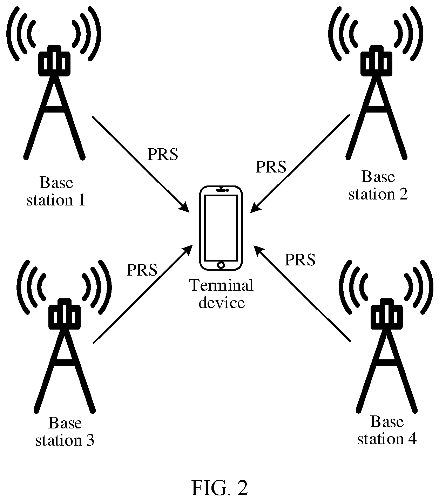

For example, as shown in FIG. 2, base stations are used as the access network devices. A base station 1, a base station 2, a base station 3, and a base station 4 send PRSs to the terminal device. The terminal device calculates an RSTD between TOA of every two of a plurality of PRSs based on TOA of the PRSs of the base stations, and reports the RSTD to the positioning server. The positioning server determines, based on the RSTD, a difference between distances between the terminal device and base stations respectively corresponding to the every two PRSs, to determine the location of the terminal device based on the difference. For example, the positioning server may use the base station 1 and the base station 2 as two focal points, and use a difference between a distance between the terminal device and the base station 1 and a distance between the terminal device and the base station 2 as a length of a real axis of a hyperbola. A point on the hyperbola is a possible location of the terminal device relative to the base station 1 and the base station 2. Similarly, the positioning server may determine a location of the terminal device relative to the base station 2 and the base station 3, a location of the terminal device relative to the base station 3 and the base station 4, and a location of the terminal device relative to the base station 1 and the base station 4. In this way, the positioning server determines that the terminal device is located in an intersection region of the four hyperbolas.

In still another possible implementation, each access network device sends a PRS to the terminal device, and the terminal device sends an SRS based on the PRS. Each access network device determines a first time difference between transmit time of the PRS and TOA of the SRS based on the transmit time of the PRS and the TOA of the SRS, and determines the location of the terminal device based on round-trip time (round-trip time, RTT) between the first time difference and a second time difference. The second time difference is a difference between TOA of the PRS and transmit time of the SRS.

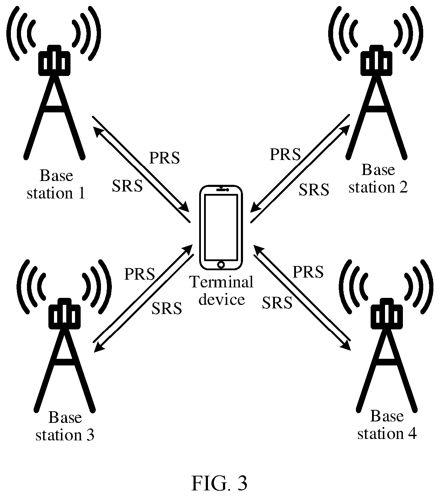

For example, as shown in FIG. 3, base stations are used as the access network devices. A base station 1, a base station 2, a base station 3, and a base station 4 each send a PRS to the terminal device. The terminal device sends, based on the received PRS, an SRS to the base station that sends the PRS. The base station determines a first time difference based on transmit time of the PRS and TOA of the SRS, and reports RTT between the first time difference and a second time difference to a positioning server. The positioning server calculates a distance between each base station and the terminal device based on each piece of RTT, to determine the location of the terminal device based on the distance. For example, the positioning server may draw a circle by using the base station 1 as a center and using a distance between the base station 1 and the terminal device as a radius. A point on the circle is a possible location of the terminal device relative to the base station 1. Similarly, the positioning server may determine locations of the terminal device relative to the base station 2, the base station 3, and the base station 4. In this way, the positioning server determines that the terminal device is located in an intersection region of the four circles.

4. Positioning of the terminal device in the NTN

In a possible implementation, when the satellite or the flight platform moves to a different location, an access network device mounted on the satellite or the flight platform sends a PRS to the terminal device, and the terminal device sends an SRS to the access network device based on the PRS. The access network device determines RTT between the access network device at a different location and the terminal device based on transmit time of a PRS, TOA of the PRS, transmit time of an SRS, and TOA of the SRS at the location, to determine the location of the terminal device.

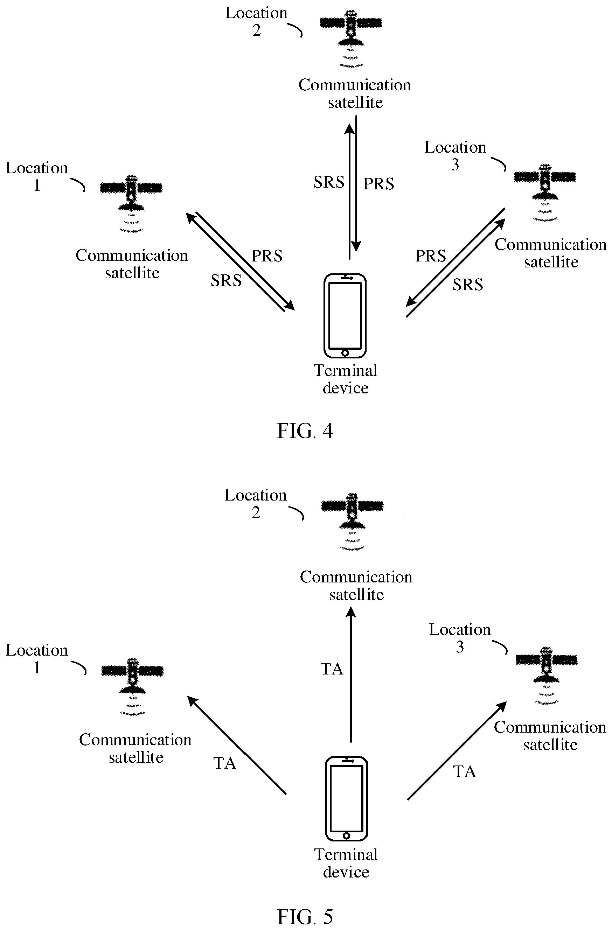

For example, as shown in FIG. 4, the access network device is a device in a communication satellite. When the communication satellite moves to a location 1, the communication satellite sends a PRS to the terminal device, and the terminal device sends an SRS to the communication satellite based on the received PRS. The communication satellite calculates, based on transmit time of the PRS, TOA of the PRS, transmit time of the SRS, and TOA of the SRS, RTT between the communication satellite at the location 1 and the terminal device, to learn of a distance between the communication satellite at the location 1 and the terminal device. Similarly, the communication satellite separately calculates a distance between the communication satellite at a location 2 and the terminal device, and a distance between the communication satellite at a location 3 and the terminal device. In this way, the communication satellite determines the location of the terminal device based on the three distances.

In this possible implementation, the PRS needs to be specially configured, resulting in higher resource overheads.

In another possible implementation, when the satellite or the flight platform moves to a different location, the terminal device may report a TA corresponding to the location, so that the access network device determines the location of the terminal device based on the TA.

For example, as shown in FIG. 5, the access network device is a device in a communication satellite. When the communication satellite moves to a location 1, the terminal device reports a current TA to the satellite, and the communication satellite calculates, based on the TA, a distance between the communication satellite at the location 1 and the terminal device. Similarly, the communication satellite separately calculates a distance between the communication satellite at a location 2 and the terminal device, and a distance between the communication satellite at a location 3 and the terminal device. In this way, the communication satellite determines the location of the terminal device based on the three distances.

In this possible implementation, because the terminal device may report an unreliable TA, precision of the location of the terminal device determined based on the TA may be low.

As described above, a current positioning method in the NTN has some disadvantages. In view of this, the positioning method in the NTN needs to be redesigned. A solution that can be easily figured out is to directly apply a method for positioning a terminal device in a terrestrial network to the NTN. However, when the method for positioning a terminal device in a terrestrial network is directly applied to the NTN, there may be some problems.

(1) The positioning solution shown in FIG. 1 relies on a prerequisite for time synchronization between the terminal device and the access network devices. In other words, the terminal device needs to implement time synchronization with all access network devices that perform signal interaction with the terminal device, that is, the access network devices that perform signal interaction with the terminal device need to be time-synchronized. However, in the NTN, the plurality of access network devices may not be time-synchronized. Therefore, the plurality of access network devices are specially adjusted to synchronize time of the plurality of access network devices, which consumes a large quantity of resources, and makes the solution more complex.

(2) The positioning solution shown in FIG. 2 relies on time synchronization between the plurality of access network devices. However, in the NTN, access network devices mounted on a plurality of satellites or a plurality of flight platforms may not be time-synchronized.

(3) In the positioning solution shown in FIG. 3, the terminal device usually needs to be connected to different satellites or flight platforms, and exchanges signals with a plurality of access network devices. Consequently, the solution is complex and is difficult to implement.

(4) In the method for positioning a terminal device in a terrestrial network, a quantity of access network devices participating in positioning needs to be greater than or equal to 3. However, in the NTN, a scenario in which one terminal device is simultaneously covered by three access network devices has considerable limitations.

In view of this, this application provides a positioning method, so that a first access network device can determine a location of a terminal device based on receive time of a first signal and receive time of a second signal, a location at which the first access network device is located when receiving the first signal and a location at which the first access network device is located when receiving the second signal, and transmit time of the first signal and transmit time of the second signal. In other words, the access network device can determine the location of the terminal device without depending on reporting of a timing advance by the terminal device, to avoid reduction in positioning precision caused by the unreliable timing advance reported by the terminal device. In other words, compared with a solution in which positioning is performed based on the timing advance reported by the terminal device, the method can improve the positioning precision.

The technical solutions in embodiments of this application may be applied to various communication systems. The communication system may be a 3rd generation partnership project (3rd generation partnership project, 3GPP) communication system, for example, a 5G system such as a long term evolution (long term evolution, LTE) system or a new radio (new radio, NR) system, a satellite communication system, an NTN system, a vehicle-to-everything (vehicle-to-everything, V2X) system, an LTE and 5G hybrid networking system, a device-to-device (device-to-device, D2D) communication system, a machine-to-machine (machine-to-machine, M2M) communication system, an internet of things (Internet of Things, IoT) communication system, or a future evolved communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine-type communication (machine-type communication, MTC), massive machine-type communication (massive machine-type communication, mMTC), D2D, V2X, and IoT.

The communication system and the communication scenario applicable to this application are merely examples for description. The communication system and the communication scenario applicable to this application are not limited thereto. The communication system and the communication scenario provided in this application do not constitute any limitation on the solutions of this application. This is uniformly described herein, and details are not described below again.

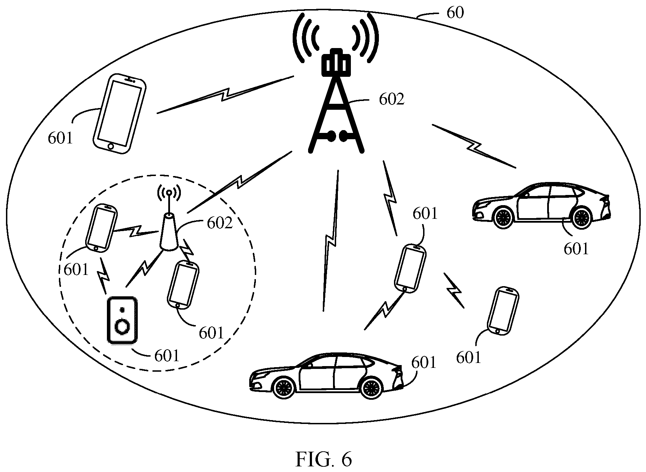

FIG. 6 shows a communication system 60 applicable to the solutions of this application according to this application. The communication system 60 includes at least one terminal device 601 and a first access network device 602. It should be understood that, a quantity of terminal devices and a quantity of access network devices in FIG. 6 are merely examples, and there may be more or fewer terminal devices and more or fewer access network devices.

Optionally, the terminal device 601 in embodiments of this application may be a user-side device configured to implement a wireless communication function, for example, a terminal or a chip that may be used in the terminal. The terminal may be a user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

Optionally, the first access network device 602 in embodiments of this application is a device that connects the terminal device 601 to a wireless network. The first access network device 602 may be referred to as a node in a radio access network (radio access network, RAN), may be referred to as a base station, or may be referred to as a radio access network node (or device).

For example, the access network device may include an evolved NodeB (NodeB or eNB or e-NodeB, evolutional NodeB) in an LTE system or an LTE-A system, for example, a conventional macro base station eNB and a micro base station eNB in a heterogeneous network scenario. Alternatively, the access network device may include a next generation NodeB (next generation NodeB, gNB) in an NR system. Alternatively, the access network device may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the access network device may include a base station in an NTN, that is, may be deployed on a flight platform or a satellite. In the NTN, the access network device may serve as a layer 1 (L1) relay (relay), may serve as a base station, or may serve as an integrated access and backhaul (integrated access and backhaul, IAB) node. Alternatively, the access network device may be a device that implements a function of the base station in IoT, for example, a device that implements the function of the base station in V2X, D2D, or machine-to-machine (machine-to-machine, M2M).

Alternatively, the access network device may be a module or unit that can implement some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). Alternatively, the access network device may be an access network device or a module of the access network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

Optionally, the CU and the DU may be divided based on protocol layers of the wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are set on the CU, and functions of a protocol layer (for example, a radio link control (radio link control, RLC) layer, a medium access control (medium access control, MAC) layer, or a physical (physical, PHY) layer) below the PDCP layer are set on the DU. For another example, functions of protocol layers above a PDCP layer are set on the CU, and functions of the PDCP layer and protocol layers below the PDCP layer are set on the DU. This is not limited.

The division into processing functions of the CU and the DU based on the protocol layers is merely an example, and may alternatively be another division manner. For example, the CU or the DU may have functions of more protocol layers through division. For another example, the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on a delay. Functions whose processing time needs to meet a delay requirement are set on the DU, and functions whose processing time does not need to meet the delay requirement are set on the CU.

Optionally, the base station in embodiments of this application may include base stations in various forms, for example, a macro base station, a micro base station (also referred to as a small cell), a relay station, an access point, a home base station, a TRP, a transmitting point (transmitting point, TP), and a mobile switching center. This is not specifically limited in embodiments of this application.

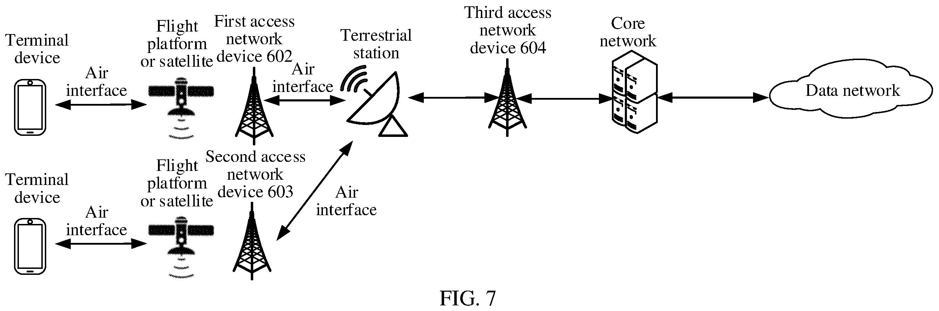

In a possible implementation, as shown in FIG. 7, the first access network device 602 is deployed on a satellite or a flight platform as a forwarding device. In this case, the communication system further includes a third access network device 604 deployed on the ground. The third access network device 604 is connected to the first access network device 602 via a terrestrial station. In addition, the third access network device 604 communicates with a data network via a core network.

In addition, the first access network device 602 may further communicate with a second access network device 603. The second access network device 603 communicates with the first access network device 602 via the terrestrial station.

Optionally, the third access network device 604 may communicate with the core network through an NG interface.

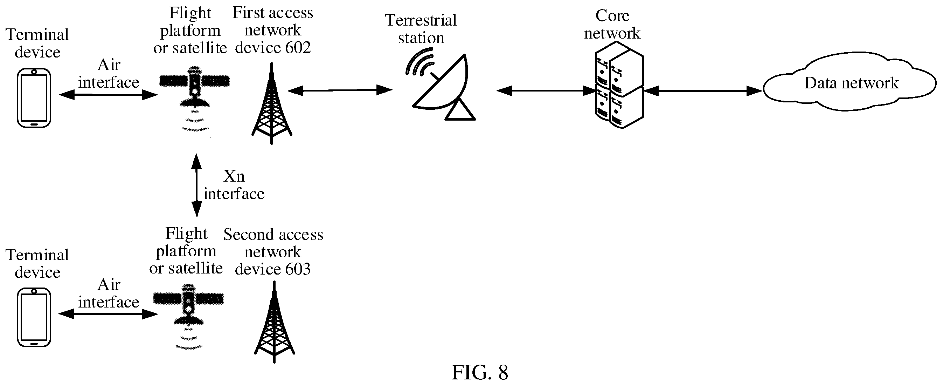

In another possible implementation, as shown in FIG. 8, the first access network device 602 is deployed on a flight platform or a satellite to implement some or all functions of the base station. In this case, the first access network device 602 communicates with a core network via a terrestrial station, and further communicates with a data network via the core network.

In addition, the first access network device 602 may further communicate with a second access network device 603 through an Xn interface. In this case, the second access network device 603 is also deployed on the satellite or the flight platform to implement some or all functions of the base station.

Optionally, in FIG. 8, communication between the first access network device 602 and the second access network device 603 may include signaling exchange and/or data transmission.

Optionally, the first access network device 602 and the second access network device 603 may communicate with each other by using an integrated access and backhaul (integrated access and backhaul, IAB) network architecture.

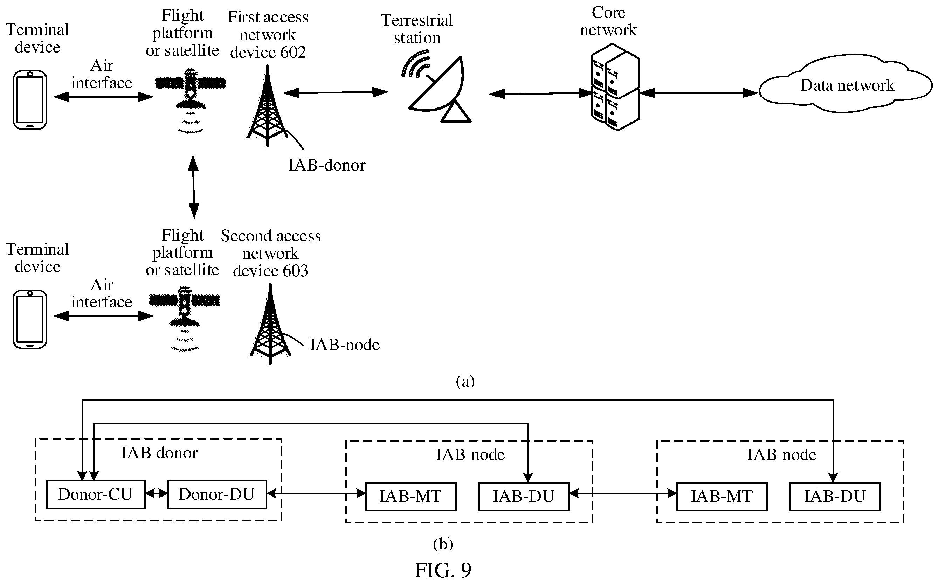

For example, as shown in (a) in FIG. 9, one of the first access network device 602 and the second access network device 603 may be used as an IAB donor (IAB donor), and the other access network device may be used as an IAB node (IAB node). The IAB donor includes a donor-CU and a donor-DU. The IAB node includes an IAB-DU and an IAB mobile terminal (IAB mobile terminal, IAB-MT).

For example, in this network architecture, as shown in (b) in FIG. 9, the donor-CU provides a connection for the donor-DU and the IAB-DU, the donor-DU provides access for the IAB-MT, and the IAB-DU provides access for an IAB-MT of a next-level IAB node. The donor-DU, the IAB-DU, and the donor-CU may communicate with each other through an FI interface.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

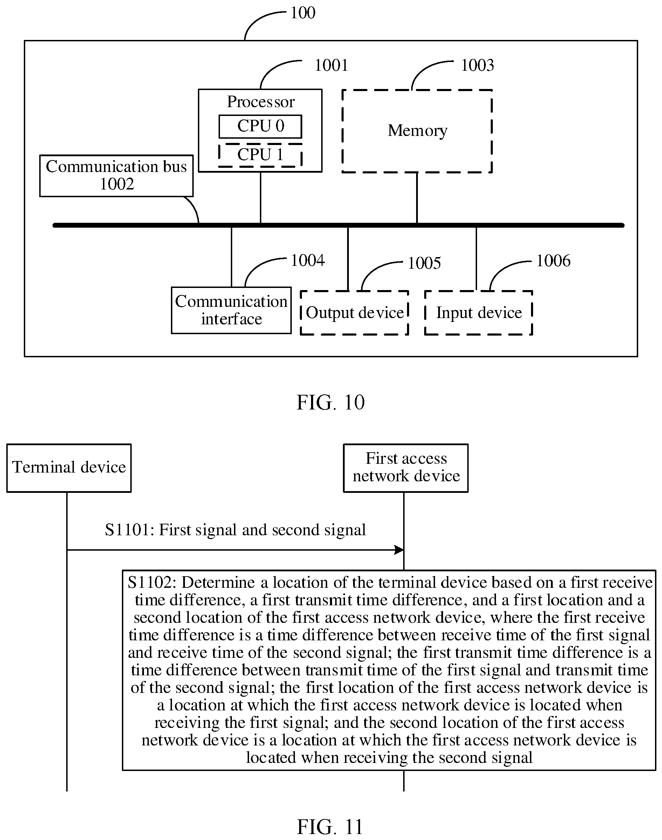

Optionally, related functions of the terminal device or the access network device in this application may be implemented through a communication apparatus 100 in FIG. 10. Refer to FIG. 10. The communication apparatus 100 includes one or more processors 1001. Further, the communication apparatus 100 may further include a communication bus 1002 and at least one communication interface (where FIG. 10 is merely an example, and an example in which the communication apparatus 100 includes a communication interface 1004 and one processor 1001 is used for description). Optionally, the communication apparatus 100 may further include a memory 1003.

The processor 1001 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core processor (single-CPU), or may be a multi-core processor (multi-CPU).

During specific implementation, in an embodiment, the processor 1001 may include one or more CPUs, for example, a CPU 0 and a CPU 1 in FIG. 10.

The communication bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representing the bus in FIG. 10, but this does not mean that there is only one bus or only one type of bus. The communication bus 1002 is configured to connect different components in the communication apparatus 100, so that the different components in the communication apparatus 100 may communicate and interact with each other.

The communication interface 1004 may be a transceiver module, configured to communicate with another device or a communication network. The communication network may be, for example, the Ethernet (Ethernet), a radio access network (radio access network, RAN), or a wireless local area network (wireless local area network, WLAN). For example, the communication interface 1004 may be an apparatus such as a transceiver or a transceiver machine. Alternatively, the communication interface 1004 may be a transceiver circuit located in the processor 1001, and is configured to implement signal input and signal output of the processor.

The memory 1003 may be an apparatus having a storage function. For example, the memory 1003 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory may exist independently and is connected to the processor through the communication bus 1002. The memory may alternatively be integrated with the processor.

The memory 1003 is configured to store computer-executable instructions for executing the solutions of this application, and the processor 1001 controls the execution. The processor 1001 is configured to execute the computer-executable instructions stored in the memory 1003, to implement the method provided in embodiments of this application.

Alternatively, optionally, in this embodiment of this application, the processor 1001 may perform functions related to processing in the method provided in the following embodiments in this application, and the communication interface 1004 is responsible for communication with another device or a communication network. This is not specifically limited in embodiments of this application.

Optionally, the computer-executable instructions in this embodiment of this application may also be referred to as application code. This is not specifically limited in embodiments of this application.

During specific implementation, in an embodiment, the communication apparatus 100 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive a user input in a plurality of manners. For example, the input device 1006 may be a mouse, a keyboard, a touchscreen device, or a sensor device.

It should be noted that, the composition structure shown in FIG. 10 does not constitute a limitation on the communication apparatus. In addition to the components shown in FIG. 10, the communication apparatus may include more or fewer components than those shown in the figure, combine some components, or have different component arrangements.

With reference to the accompanying drawings, the following describes the positioning method provided in embodiments of this application. It may be understood that in embodiments of this application, the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

In an example, the following embodiments may be applied to an NTN scenario, for example, a satellite communication scenario, or another scenario in an NTN, such as a low altitude platform (low altitude platform, LAP) subnetwork (LAP subnetwork) scenario or a high altitude platform (high altitude platform, HAP) subnetwork (HAP subnetwork) scenario. This is not specifically limited herein.

FIG. 11 shows a positioning method according to this application. The positioning method includes the following steps.

S1101: A terminal device sends a first signal and a second signal to a first access network device. Correspondingly, the first access network device receives the first signal and the second signal from the terminal device.

Optionally, the terminal device may send the first signal to the first access network device by using a first timing advance, and send the second signal to the first access network device by using a second timing advance. The first timing advance may be understood as a timing advance corresponding to the first signal, and the second timing advance may be understood as a timing advance corresponding to the second signal.

In a possible implementation, the first timing advance is the same as the second timing advance, that is, the terminal device sends the first signal and the second signal by using a fixed timing advance.

For example, if both the first timing advance and the second timing advance are 0.05 milliseconds (millisecond, ms), the terminal device sends the first signal and the second signal to the first access network device by using a timing advance of 0.05 ms.

In another possible implementation, the first timing advance is different from the second timing advance, that is, the terminal device sends the first signal and the second signal by using non-fixed timing advances.

For example, if the first timing advance is 0.05 ms, and the second timing advance is 0.07 ms, the terminal device sends the first signal to the first access network device by using a timing advance of 0.05 ms, and sends the second signal to the first access network device by using a timing advance of 0.07 ms.

Optionally, the first signal and the second signal are not simultaneously sent, in other words, there is a time interval between transmit time of the first signal and transmit time of the second signal. For example, in the following embodiments of this application, an example in which the terminal device sends the first signal before the second signal is used for description. Certainly, the terminal device may send the second signal before the first signal. This is not limited in this application.

Optionally, the first signal and the second signal may be of a same type. For ease of description, the types of the first signal and the second signal are denoted as a first type below.

Optionally, the first type includes but is not limited to an SRS, a demodulation reference signal (demodulation reference signal, DMRS), or a preamble (preamble). In other words, the first signal and the second signal may be SRSs, DMRSs, preambles, or the like.

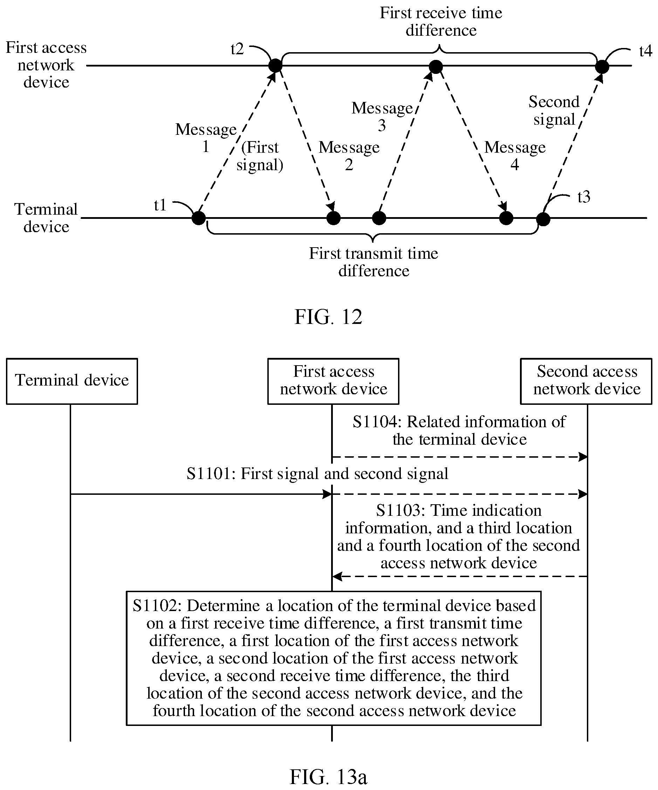

For example, when the first signal is a preamble, the preamble may be a random access preamble in a random access procedure. In this case, the type of the second signal is the same as the type of the first signal, that is, the second signal is also a preamble. However, the second signal may be sent after the random access procedure is completed. For example, as shown in FIG. 12, a random access preamble carried in a message 1 (Msg) in the random access procedure is used as the first signal. In this case, a message 2 (Msg 2), a message 3 (Msg 3), and a message 4 (Msg 4) are all signals in the random access procedure. After the terminal device receives the message 4 from the first access network device, the random access procedure is completed, and the terminal device is in a connected state. In this case, the terminal device may send the second signal to the first access network device.

Optionally, when the first signal is a random access preamble, the terminal device may send a time difference between the transmit time of the first signal and the transmit time of the second signal to the first access network device.

Optionally, the first access network device may indicate the terminal device to send the first signal and the second signal.

Optionally, the first access network device may indicate the first type.

Optionally, when sending a signal of another type other than the first type, the terminal device may send the signal by using a timing advance corresponding to a moment at which the signal is sent.

S1102: The first access network device determines a location of the terminal device based on a first receive time difference, a first transmit time difference, and a first location and a second location of the first access network device.

The first receive time difference is a time difference between receive time of the first signal (that is, time at which the first access network device receives the first signal) and receive time of the second signal (that is, time at which the first access network device receives the second signal). The first transmit time difference is the time difference between the transmit time of the first signal and the transmit time of the second signal. The first location of the first access network device is a location at which the first access network device is located when receiving the first signal. The second location of the first access network device is a location at which the first access network device is located when receiving the second signal.

Optionally, the first access network device may configure the transmit time of the first signal and the transmit time of the second signal. Therefore, the first access network device may obtain the first transmit time difference without needing for reporting by the terminal device.

Optionally, the first access network device may determine the receive time of the first signal, the first location of the first access network device, the receive time of the second signal, and the second location of the first access network device.

In some implementation scenarios, in step S1101, in addition to the first access network device, a second access network device may also receive the first signal and the second signal from the terminal device.

Optionally, the terminal device may send the first signal only once, and send the second signal only once. Both the first access network device and the second access network device may receive the first signal and the second signal that are sent by the terminal device.

Optionally, the first access network device and the second access network device are on same frequency.

Optionally, the first access network device and the second access network device may be time-synchronized. Alternatively, the first access network device and the second access network device may not be time-synchronized.

Optionally, the second access network device may determine receive time of the first signal (that is, time at which the second access network device receives the first signal), a third location of the second access network device, receive time of the second signal (that is, time at which the second access network device receives the second signal), and a fourth location of the second access network device. The third location of the second access network device is a location at which the second access network device is located when receiving the first signal, and the fourth location of the second access network device is a location at which the second access network device is located when receiving the second signal.

Optionally, in a scenario in which the second access network device also receives the first signal and the second signal, that the first access network device determines the location of the terminal device based on the first receive time difference, the first transmit time difference, and the first location and the second location of the first access network device includes: determining the location of the terminal device based on the first receive time difference, the first transmit time difference, the first location of the first access network device, the second location of the first access network device, a second receive time difference, the third location of the second access network device, and the fourth location of the second access network device.

Optionally, as shown in FIG. 13a, in the scenario in which the second access network device also receives the first signal and the second signal, before step S1102, the positioning method may further include step S1103.

S1103: The second access network device sends time indication information, and the third location and the fourth location of the second access network device to the first access network device. Correspondingly, the first access network device receives, from the second access network device, the time indication information, and the third location and the fourth location of the second access network device.

The time indication information indicates the second receive time difference, and the second receive time difference is a time difference between the time at which the second access network device receives the first signal and the time at which the second access network device receives the second signal.

Optionally, the time indication information includes the second receive time difference; or the time indication information includes the time at which the second access network device receives the first signal and the time at which the second access network device receives the second signal.

Optionally, before the second access network device receives the first signal and the second signal from the terminal device, the positioning method may further include step S1104.

S1104: The first access network device sends related information of the terminal device to the second access network device. Correspondingly, the second access network device receives the related information from the first access network device. The related information is used to determine a receive time window of the first signal and a receive time window of the second signal.

Optionally, the related information includes but is not limited to at least one of resource information, identification information of a cell in which the terminal device is located, or type information of the first signal and the second signal. The resource information indicates a time-frequency resource on which the first signal is located and/or a time-frequency resource on which the second signal is located. The type information indicates the types of the first signal and the second signal, for example, indicates that the first signal and the second signal are of the first type.

According to the positioning method in embodiments of this application, the first access network device can determine the location of the terminal device based on a receive time difference between the first signal and the second signal, the location at which the first access network device is located when receiving the first signal and the location at which the first access network device is located when receiving the second signal, and a transmit time difference between the first signal and the second signal. In other words, the access network device can determine the location of the terminal device without depending on reporting of a timing advance by the terminal device, to avoid reduction in positioning precision caused by the unreliable timing advance reported by the terminal device. In other words, compared with a solution in which positioning is performed based on the timing advance reported by the terminal device, the method can improve the positioning precision.

In addition, the first access network device can determine the location of the terminal device without additionally configuring a dedicated positioning reference signal (positioning reference signal, PRS). This reduces resource overheads.

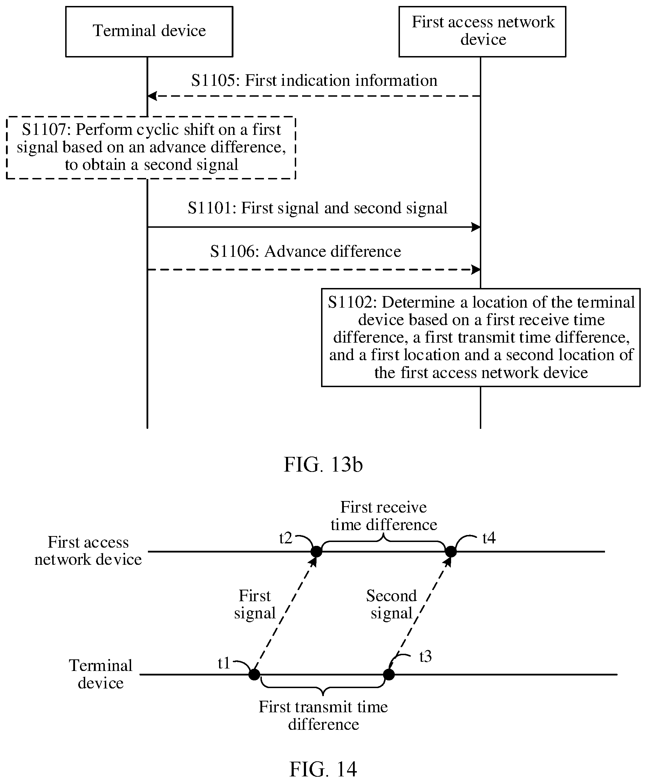

Optionally, as shown in FIG. 13b, before step S1101, the positioning method may further include step S1105.

S1105: The first access network device sends first indication information to the terminal device. Correspondingly, the terminal device receives the first indication information from the first access network device. The first indication information indicates the first timing advance and/or the second timing advance.

Optionally, that the first indication information indicates the first timing advance and/or the second timing advance may include: The first indication information indicates that the first timing advance is the same as or different from the second timing advance.

For example, the first indication information may be a one-bit value. When a value of the first indication information is 1, it indicates that the first timing advance is the same as the second timing advance; or when a value of the first indication information is 0, it indicates that the first timing advance is different from the second timing advance. Alternatively, when a value of the first indication information is 1, it indicates that the first timing advance is different from the second timing advance; or when a value of the first indication information is 0, it indicates that the first timing advance is the same as the second timing advance.

Optionally, that the first indication information indicates the first timing advance and/or the second timing advance may further include: The first indication information indicates a value of the first timing advance and a value of the second timing advance.

For example, when the first timing advance is the same as the second timing advance, the first indication information may indicate that a timing advance corresponding to a moment at which the terminal device receives the first indication information is used as the first timing advance and the second timing advance; or the first indication information may indicate that a timing advance corresponding to a sending moment of the first signal is used as the first timing advance and the second timing advance.

Alternatively, when the first timing advance is different from the second timing advance, the first indication information may indicate that a timing advance corresponding to a sending moment of the first signal is used as the first timing advance, and a timing advance corresponding to a sending moment of the second signal is used as the second timing advance.

Optionally, the first access network device may not send the first indication information to the terminal device. In this case, the value of the first timing advance, the value of the second timing advance, or whether the first timing advance is the same as the second timing advance may be determined by the terminal device.

Optionally, when the first signal is a random access preamble in a random access procedure, the first indication information may indicate that the timing advance corresponding to the sending moment of the first signal is used as the first timing advance.

Optionally, the first indication information may be carried in at least one of downlink control information (downlink control information, DCI), a MAC control element (medium access control-control element, MAC-CE), or an RRC message. For example, when the first indication information is carried in the DCI, a format of the DCI may be DCI format 1_0. When the first indication information is carried in the RRC message, the RRC message may be an RRC reconfiguration (reconfiguration) message.

Optionally, when the first timing advance is different from the second timing advance, the first access network device needs to determine the location of the terminal device with reference to the parameters in step S1102 and an advance difference. The advance difference is a difference between the first timing advance and the second timing advance. For example, the first access network device may obtain the advance difference in the following two manners.

In a first possible manner, the first access network device may receive the advance difference sent by the terminal device.

Optionally, as shown in FIG. 13b, before step S1102, the positioning method may further include step S1106.

S1106: The terminal device sends the advance difference to the first access network device. Correspondingly, the first access network device receives the advance difference from the terminal device.

Optionally, the access network device may indicate the terminal device to send the advance difference to the first access network device.

In a second possible manner, the first access network device determines the advance difference based on the first signal and the second signal. The second signal is a signal obtained by performing cyclic shift on the first signal.

Optionally, as shown in FIG. 13b, before step S1101, the positioning method may further include step S1107.

S1107: The terminal device performs cyclic shift on the first signal based on the advance difference, to obtain the second signal.

For example, the first signal is 1001. When the advance difference is 0.01 ms, and a step size of cyclic shift corresponding to the advance difference is two bits, the second signal may be 0110.

Optionally, after receiving the first signal and the second signal from the terminal device, the first access network device may determine a step size of cyclic shift based on the first signal and the second signal, and determine the advance difference based on the step size.

For example, the first access network device may negotiate with the terminal device in advance about a correspondence between the step size of the cyclic shift and the advance difference. For example, when the advance difference is 0.01 ms, the step size of the cyclic shift is one bit; when the advance difference is 0.02 ms, the step size of the cyclic shift is one bit; or when the advance difference is 0.01 ms, the step size of the cyclic shift is two bits.

Optionally, the foregoing descriptions are provided merely by using an example in which ms is used as a unit of the timing advance (such as the first timing advance and/or the second timing advance) and the advance difference. Actually, the unit of the timing advance and the advance difference may further include microsecond (microsecond, $\mu$s) and nanosecond (nanosecond, ns). This is not limited in this application.

According to this optional solution, when the first timing advance is different from the second timing advance, the first receive time difference may include the difference between the first timing advance and the second timing advance. In this case, the terminal device needs to directly or indirectly report the difference between the first timing advance and the second timing advance to the first access network device, to prevent precision of the location of the terminal device that is subsequently determined by directly using the first receive time difference from being reduced because the difference between the first timing advance and the second timing advance is not subtracted from the first receive time difference.

For step S1102:

The location of the terminal device may be determined based on the following two scenarios.

Scenario 1: The first access network device receives the first signal and the second signal, and the second access network device does not receive the first signal and the second signal.

In a possible implementation, if the first timing advance is the same as the second timing advance, the first access network device may determine the location of the terminal device based on the first receive time difference, the first transmit time difference, the first location of the first access network device, and the second location of the first access network device.

Optionally, the first receive time difference, the first transmit time difference, the first location of the first access network device, the second location of the first access network device, and the location of the terminal device satisfy Formula (1):

$$\Delta_1 - \Delta = \|s_2 - u\| \div c - \|s_1 - u\| \div c \quad \text{Formula (1)}.$$

$\Delta_1$ represents the first receive time difference, $\Delta$ represents the first transmit time difference, $s_1$ represents the first location of the first access network device, $s_2$ represents the second location of the first access network device, u represents the location of the terminal device, and c represents the speed of light.

Optionally, because both the first access network device and the terminal device are located in three-dimensional space, the first location, the second location, and the location of the terminal device are all locations in the three-dimensional space. Therefore, $s_1$, $s_2$, and u are respectively $s_1(x, y, z)$, $s_2(x, y, z)$, and $u(x, y, z)$.

For example, as shown in FIG. 14, the terminal device sends the first signal to the first access network device at a moment t1. The first access network device receives a signal from the terminal device, detects the signal, determines that the signal is the first signal, and determines receive time t2 of the first signal and the first location $s_1$ of the first access network device at the moment t2. The terminal device sends the second signal to the first access network device at a moment t3 after the first transmit time difference $\Delta$ since the terminal device sends the first signal. The first access network device receives a signal from the terminal device, detects the signal, determines the second signal, and determines receive time t4 of the second signal and the second location $s_2$ of the first access network device at the moment t4. The first access network device determines the location u of the terminal device according to Formula (1).

Optionally, based on $u(x, y, z)$ mentioned above, when two values of x, y, and z are known, an unknown value may be determined according to Formula (1), to determine the location of the terminal device.

Optionally, based on $u(x, y, z)$ mentioned above, when none of three values is known, the terminal device may further send at least two third signals of the first type to the first access network device. The first access network device lists, based on a relationship (for example, a receive time difference, a transmit time difference, or a location of the access network device) between every two of the first signal, the second signal, and the at least two third signals, at least three equations similar to Formula (1), and separately resolves x, y, and z, to determine the location of the terminal device.

Optionally, a quantity of times of sending a signal of the first type is positively correlated with the positioning precision of the terminal device. In other words, higher positioning precision of the terminal device indicates a larger quantity of sending times (that is, more to-be-sent signals of the first type).

In another possible implementation, if the first timing advance is different from the second timing advance, the first access network device may determine the location of the terminal device based on the first receive time difference, the first transmit time difference, the first location of the first access network device, the second location of the first access network device, and the advance difference.

Optionally, the first receive time difference, the first transmit time difference, the first location of the first access network device, the second location of the first access network device, the advance difference, and the location of the terminal device satisfy Formula (2):

$$\Delta_1 - \Delta - (TA_2 - TA_1) = \|s_2 - u\| \div c - \|s_1 - u\| \div c \quad \text{Formula (2)}.$$

$\Delta_1$ represents the first receive time difference, $\Delta$ represents the first transmit time difference, $TA_1$ represents the first timing advance, $TA_2$ represents the second timing advance, $s_1$ represents the first location of the first access network device, $s_2$ represents the second location of the first access network device, u represents the location of the terminal device, and c represents the speed of light.

Optionally, based on $u(x, y, z)$ mentioned above, when two values of x, y, and z are known, an unknown value may be determined according to Formula (2), to determine the location of the terminal device.

Optionally, based on $u(x, y, z)$ mentioned above, when none of three values is known, the terminal device may further send at least two third signals of the first type to the first access network device. The first access network device lists, based on a relationship (for example, a receive time difference, a transmit time difference, or a location of the access network device) between every two of the first signal, the second signal, and the at least two third signals, at least three equations similar to Formula (2), and separately resolves x, y, and z, to determine the location of the terminal device.

Scenario 2: The first access network device receives the first signal and the second signal, and the second access network device also receives the first signal and the second signal.

In a possible implementation, if the first timing advance is the same as the second timing advance, the first access network device may determine the location of the terminal device based on the first receive time difference, the first transmit time difference, the first location of the first access network device, the second location of the first access network device, the second receive time difference, the third location of the second access network device, and the fourth location of the second access network device.

Optionally, the first receive time difference, the first transmit time difference, the first location of the first access network device, the second location of the first access network device, the second receive time difference, the third location of the second access network device, the fourth location of the second access network device, and the location of the terminal device satisfy Formula (3) (namely, Formula (3-1), Formula (3-2), and Formula (3-3)):

$$\Delta_1 - \Delta = \|\boldsymbol{s}_2 - \boldsymbol{u}\| \div c - \|\boldsymbol{s}_1 - \boldsymbol{u}\| \div c \quad \text{Formula (3-1)};$$

$$\Delta_2 - \Delta = \|\boldsymbol{L}_2 - \boldsymbol{u}\| \div c - \|\boldsymbol{L}_1 - \boldsymbol{u}\| \div c \quad \text{Formula (3-2)};$$

and

$$\Delta_2 - \Delta_1 = \|\boldsymbol{L}_2 - \boldsymbol{u}\| \div c - \|\boldsymbol{L}_1 - \boldsymbol{u}\| \div c - \|\boldsymbol{s}_2 - \boldsymbol{u}\| \div c + \|\boldsymbol{s}_1 - \boldsymbol{u}\| \div c \quad \text{Formula (3-3)}.$$

$\Delta_1$ represents the first receive time difference, $\Delta$ represents the first transmit time difference, $\boldsymbol{s}_1$ represents the first location of the first access network device, $\boldsymbol{s}_2$ represents the second location of the first access network device, $\boldsymbol{u}$ represents the location of the terminal device, $c$ represents the speed of light, $\boldsymbol{L}_1$ represents the third location of the second access network device, $\boldsymbol{L}_2$ represents the fourth location of the second access network device, and $\Delta_2$ represents the second receive time difference.

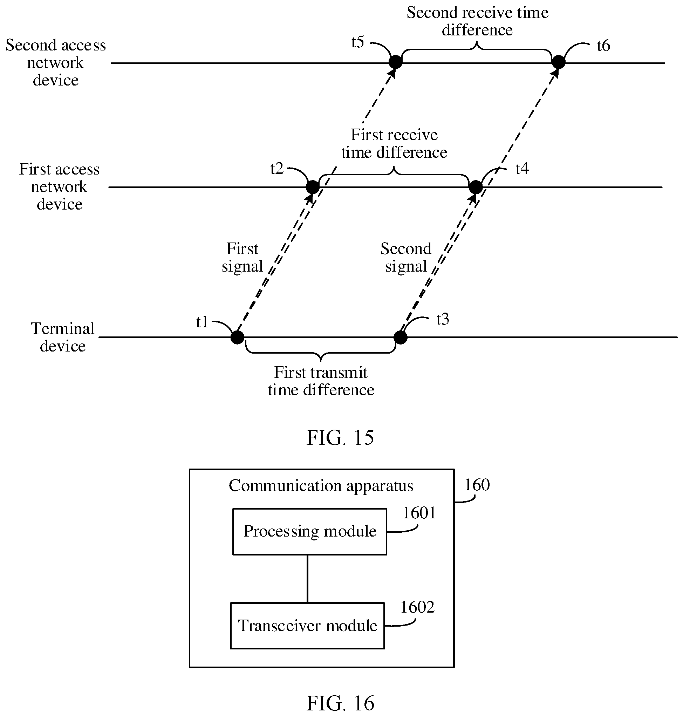

For example, as shown in FIG. 15, the terminal device sends the first signal to the first access network device and the second access network device at a moment t1. The first access network device and the second access network device separately receive a signal from the terminal device, and detect the signal, to determine that the signal is the first signal. The first access network device determines receive time t2 of the first signal and the first location $\boldsymbol{s}_1$ of the first access network device at the moment t2, and the second access network device determines receive time t5 of the first signal and the third location $\boldsymbol{L}_1$ of the second access network device at the moment t5. The terminal device sends the second signal to the first access network device and the second access network device at a moment t3 after the first transmit time difference $\Delta$ since the terminal device sends the first signal. The first access network device and the second access network device separately receive a signal from the terminal device, and detect the signal, to determine that the signal is the second signal. The first access network device determines receive time t4 of the second signal and the second location $\boldsymbol{s}_2$ of the first access network device at the moment t4, and the second access network device determines receive time t6 of the second signal and the fourth location $\boldsymbol{L}_2$ of the second access network device at the moment t6. The second access network device sends, to the first access network device, a difference, namely, the second receive time difference $\Delta_2$, between t5 and t6 that are determined by the second access network device, $\boldsymbol{L}_1$, and $\boldsymbol{L}_2$, so that the first access network device determines the location $\boldsymbol{u}$ of the terminal device according to Formula (3).

Optionally, based on $u(x, y, z)$ mentioned above, when one value of x, y, and z is known, unknown values may be determined according to Formula (3), to determine the location of the terminal device.

Optionally, based on $u(x, y, z)$ mentioned above, when none of three values is known, the terminal device may further send at least one third signal of the first type to the first access network device and the second access network device. The first access network device lists, based on a relationship (for example, a receive time difference, a transmit time difference, or a location of the access network device) between every two of the first signal, the second signal, and the at least one third signal, at least three equations similar to Formula (3), and separately resolves x, y, and z, to determine the location of the terminal device.

In another possible implementation, if the first timing advance is different from the second timing advance, the first access network device may determine the location of the terminal device based on a first parameter and the advance difference. Alternatively, the first access network device may determine the location of the terminal device based on a first parameter. The first parameter includes the first receive time difference, the first transmit time difference, the first location of the first access network device, the second location of the first access network device, the second receive time difference, the third location of the second access network device, and the fourth location of the second access network device.

Optionally, when the first access network device determines the location of the terminal device based on the first parameter and the advance difference, the first receive time difference, the first transmit time difference, the first location of the first access network device, the second location of the first access network device, the second receive time difference, the third location of the second access network device, the fourth location of the second access network device, the advance difference, and the location of the terminal device satisfy Formula (4-1) and Formula (4-2):

$$\Delta_1 - \Delta - (TA_2 - TA_1) = \|\boldsymbol{s}_2 - \boldsymbol{u}\| \div c - \|\boldsymbol{s}_1 - \boldsymbol{u}\| \div c \quad \text{Formula (4-1);}$$

and

$$\Delta_2 - \Delta - (TA_2 - TA_1) = \|\boldsymbol{L}_2 - \boldsymbol{u}\| \div c - \|\boldsymbol{L}_1 - \boldsymbol{u}\| \div c \quad \text{Formula (4-2).}$$

$\Delta_1$ represents the first receive time difference, $\Delta$ represents the first transmit time difference, $\Delta_2$ represents the second receive time difference, $\boldsymbol{s}_1$ represents the first location of the first access network device, $\boldsymbol{s}_2$ represents the second location of the first access network device, $TA_1$ represents the first timing advance, $TA_2$ represents the second timing advance, $\boldsymbol{u}$ represents the location of the terminal device, $c$ represents the speed of light, $\boldsymbol{L}_1$ represents the third location of the second access network device, and $\boldsymbol{L}_2$ represents the fourth location of the second access network device.

Optionally, based on $u$(x, y, z) mentioned above, when one value of x, y, and z is known, unknown values may be determined according to Formula (4-1) and Formula (4-2), to determine the location of the terminal device.

Optionally, based on $u$(x, y, z) mentioned above, when none of three values is known, the terminal device may further send at least one third signal of the first type to the first access network device and the second access network device. The first access network device lists, based on a relationship (for example, a receive time difference, a transmit time difference, or a location of the access network device) between every two of the first signal, the second signal, and the at least one third signal, at least three equations similar to Formula (4-1) and/or Formula (4-2), and separately resolves x, y, and z, to determine the location of the terminal device.

Optionally, when the first access network device determines the location of the terminal device based on the first parameter, the first receive time difference, the first transmit time difference, the first location of the first access network device, the second location of the first access network device, the second receive time difference, the third location of the second access network device, the fourth location of the second access network device, and the location of the terminal device satisfy Formula (4-3):

$$\Delta_2 - \Delta_1 = \|\boldsymbol{L}_2 - \boldsymbol{u}\| \div c - \|\boldsymbol{L}_1 - \boldsymbol{u}\| \div c - \|\boldsymbol{s}_2 - \boldsymbol{u}\| \div c + \|\boldsymbol{s}_1 - \boldsymbol{u}\| \div c \quad \text{Formula (4-3).}$$

$\Delta_1$ represents the first receive time difference, $\Delta_2$ represents the second receive time difference, $\boldsymbol{s}_1$ represents the first location of the first access network device, $\boldsymbol{s}_2$ represents the second location of the first access network device, $\boldsymbol{u}$ represents the location of the terminal device, $c$ represents the speed of light, $\boldsymbol{L}_1$ represents the third location of the second access network device, and $\boldsymbol{L}_2$ represents the fourth location of the second access network device.

Optionally, based on $u$(x, y, z) mentioned above, when two values of x, y, and z are known, an unknown value may be determined according to Formula (4-3), to determine the location of the terminal device.

Optionally, based on $u$(x, y, z) mentioned above, when none of three values is known, the terminal device may further send at least two third signals of the first type to the first access network device and the second access network device. The first access network device lists, based on a relationship (for example, a receive time difference, a transmit time difference, or a location of the access network device) between every two of the first signal, the second signal, and the at least two third signals, at least three equations similar to Formula (4-3), and separately resolves x, y, and z, to determine the location of the terminal device.

Alternatively, the terminal device may further send at least one third signal of the first type to the first access network device and the second access network device. The first access network device lists, based on a relationship (for example, a receive time difference, a transmit time difference, or a location of the access network device) between every two of the first signal, the second signal, and the at least one third signal, at least one equation similar to Formula (4-3) and at least two equations similar to Formula (4-1) and/or Formula (4-2), and separately resolves x, y, and z, to determine the location of the terminal device.

It should be noted that, in Scenario 2, the descriptions are provided merely by using an example in which two access network devices (namely, the first access network device and the second access network device) determine the location of the terminal device. In this application, the location of the terminal device can be further determined based on more than two access network devices. The positioning process based on the two access network devices may be used in combination with a positioning process based on the more than two access network devices. Details are not described in this application.

Optionally, a quantity of access network devices is positively correlated with the positioning precision of the terminal device.

Based on Scenario 2, a plurality of access network devices may participate in positioning of the terminal device. Compared with a solution in which a single access network device performs positioning of the terminal device, this solution can reduce a quantity of times that the terminal device sends a signal, to reduce a positioning delay and improve positioning efficiency.

It should be noted that, the foregoing descriptions are provided by using an example in which both the first access network device and the second access network device implement some or all functions of a base station (for example, in the scenario shown in FIG. 8 or FIG. 9). Actually, the first access network device and/or the second access network device may alternatively be configured only for transparent forwarding (for example, in the scenario shown in FIG. 7). For example, the first access network device is configured only for transparent forwarding. After receiving the first signal and/or the second signal, the first access network device needs to forward the first signal and/or the second signal to a third access network device. The first indication information and/or an indication (for example, indicating the first signal and the second signal that are sent by the terminal device, and indicating the first type) sent by the first access network device to the terminal device are/is from the third access network device. In addition, the third access network device determines the location of the terminal device based on a third receive time difference, the first transmit time difference, the first location of the first access network device, and the second location of the first access network device. The third receive time difference is a time difference between time at which the third access network device receives the first signal through the first access network device and time at which the third access network device receives the second signal through the first access network device.

The following describes a process in which the third access network device determines the location of the terminal device when the first access network device and/or the second access network device are/is configured only for transparent forwarding.

In a possible implementation, when the first access network device receives the first signal and the second signal, the second access network device does not receive the first signal and the second signal, and the first access network device is configured only for transparent forwarding (for example, in the scenario shown in FIG. 7), if the first timing advance is the same as the second timing advance, the third access network device may determine the location of the terminal device based on the third receive time difference, the first transmit time difference, the first location of the first access network device, the second location of the first access network device, and a first delay. The first delay is a transmission delay between the first access network device and the third access network device that is deployed on the ground. The first delay includes a transmission delay of the first signal between the first access network device and the third access network device and a transmission delay of the second signal between the first access network device and the third access network device.

Optionally, the third receive time difference, the first transmit time difference, the first location of the first access network device, the second location of the first access network device, the first delay, and the location of the terminal device satisfy Formula (5):

$$\Delta_3 - \Delta - (T_2 - T_1) = \|\boldsymbol{s_2} - \boldsymbol{u}\| \div c - \|\boldsymbol{s_1} - \boldsymbol{u}\| \div c \quad \text{Formula (5)}.$$

$\Delta_3$ represents the third receive time difference, $\Delta$ represents the first transmit time difference, $T_1$ represents the transmission delay of the first signal between the first access network device and the third access network device, $T_2$ represents the transmission delay of the second signal between the first access network device and the third access network device, $\boldsymbol{s_1}$ represents the first location of the first access network device, $\boldsymbol{s_2}$ represents the second location of the first access network device, $\boldsymbol{u}$ represents the location of the terminal device, and c represents the speed of light.

For example, the terminal device sends the first signal to the first access network device at a moment t1. The first access network device receives a signal from the terminal device at a moment t2, and forwards the signal to the third access network device. The third access network device detects the signal to determine that the signal is the first signal. The third access network device determines receive time t7 at which the third access network device receives the first signal through the first access network device and the first location $\boldsymbol{s_1}$ of the first access network device at the moment t2. In this case, t7 includes $T_1$ in the first delay, and t2 is a difference between t7 and $T_1$. The terminal device sends the second signal to the first access network device at a moment t3 after the first transmit time difference $\Delta$ since the terminal device sends the first signal. The first access network device receives a signal from the terminal device at a moment t4, and forwards the signal to the third access network device. The third access network device detects the signal to determine that the signal is the second signal. The third access network device determines receive time t8 at which the third access network device receives the second signal through the first access network device and the second location $\boldsymbol{s_2}$ of the first access network device at the moment t4. In this case, t8 includes $T_2$ in the first delay, and t4 is a difference between t8 and $T_2$. The third access network device determines the location $\boldsymbol{u}$ of the terminal device according to Formula (5).

Optionally, based on $u(x, y, z)$ mentioned above, when two values of x, y, and z are known, an unknown value may be determined according to Formula (5), to determine the location of the terminal device.

Optionally, based on $u(x, y, z)$ mentioned above, when none of three values is known, the terminal device may further send at least two third signals of the first type to the first access network device. The third access network device lists, based on a relationship (for example, a receive time difference, a transmit time difference, or a location of the access network device) between every two of the first signal, the second signal, and the at least two third signals, at least three equations similar to Formula (5), and separately resolves x, y, and z, to determine the location of the terminal device.

In another possible implementation, when the first access network device receives the first signal and the second signal, the second access network device does not receive the first signal and the second signal, and the first access network device is configured only for transparent forwarding (for example, in the scenario shown in FIG. 7), if the first timing advance is different from the second timing advance, the third access network device may determine the location of the terminal device based on the first receive time difference, the first transmit time difference, the first location of the first access network device, the second location of the first access network device, a first delay, and the advance difference.

Optionally, the third receive time difference, the first transmit time difference, the first location of the first access network device, the second location of the first access network device, the advance difference, and the location of the terminal device satisfy Formula (6):

$$\Delta_3 - \Delta - (T_2 - T_1) - (TA_2 - TA_1) = \|s_2 - u\| \div c - \|s_1 - u\| \div c \quad \text{Formula (6)}.$$

$\Delta_3$ represents the third receive time difference, $\Delta$ represents the first transmit time difference, $T_1$ represents a transmission delay of the first signal between the first access network device and the third access network device, $T_2$ represents a transmission delay of the second signal between the first access network device and the third access network device, $TA_1$ represents the first timing advance, $TA_2$ represents the second timing advance, $s_1$ represents the first location of the first access network device, $s_2$ represents the second location of the first access network device, $u$ represents the location of the terminal device, and c represents the speed of light.

Optionally, based on $u$(x, y, z) mentioned above, when two values of x, y, and z are known, an unknown value may be determined according to Formula (6), to determine the location of the terminal device.

Optionally, based on $u$(x, y, z) mentioned above, when none of three values is known, the terminal device may further send at least two third signals of the first type to the first access network device. The terminal device lists, based on a relationship (for example, a receive time difference, a transmit time difference, or a location of the access network device) between every two of the first signal, the second signal, and the at least two third signals, at least three equations similar to Formula (6), and separately resolves x, y, and z, to determine the location of the terminal device.

In another possible implementation, when the first access network device receives the first signal and the second signal, the second access network device also receives the first signal and the second signal, and both the first access network device and the second access network device are configured only for transparent forwarding (for example, in the scenario shown in FIG. 7), if the first timing advance is the same as the second timing advance, the third access network device may determine the location of the terminal device based on the third receive time difference, the first transmit time difference, the first location of the first access network device, the second location of the first access network device, a fourth receive time difference, the third location of the second access network device, the fourth location of the second access network device, a first delay, and a second delay. The fourth receive time difference is a time difference between time at which the third access network device receives the first signal through the second access network device and time at which the third access network device receives the second signal through the second access network device. The second delay includes a transmission delay of the first signal between the second access network device and the third access network device and a transmission delay of the second signal between the second access network device and the third access network device.

Optionally, the third receive time difference, the first transmit time difference, the first location of the first access network device, the second location of the first access network device, the fourth receive time difference, the third location of the second access network device, the fourth location of the second access network device, the first delay, the second delay, and the location of the terminal device satisfy Formula (7) (namely, Formula (7-1), Formula (7-2), and Formula (7-3)):

$$\Delta_3 - \Delta - (T_2 - T_1) = \|s_2 - u\| \div c - \|s_1 - u\| \div c \quad \text{Formula (7-1)};$$

$$\Delta_4 - \Delta - (T_4 - T_3) = \|L_2 - u\| \div c - \|L_1 - u\| \div c \quad \text{Formula (7-2)};$$

and

$$\Delta_4 - \Delta_3 - (T_4 - T_3) + (T_2 - T_1) = \|L_2 - u\| \div c - \|L_1 - u\| \div c - \|s_2 - u\| \div c +$$

$$\|s_1 - u\| \div c \quad \text{Formula (7-3)}.$$

$\Delta_3$ represents the third receive time difference, $\Delta_4$ represents the fourth receive time difference, $\Delta$ represents the first transmit time difference, $T_1$ represents a transmission delay of the first signal between the first access network device and the third access network device, $T_2$ represents a transmission delay of the second signal between the first access network device and the third access network device, $T_3$ represents the transmission delay of the first signal between the second access network device and the third access network device, $T_4$ represents the transmission delay of the second signal between the second access network device and the third access network device, $s_1$ represents the first location of the first access network device, $s_2$ represents the second location of the first access network device, $u$ represents the location of the terminal device, c represents the speed of light, $L_1$ represents the third location of the second access network device, and $L_2$ represents the fourth location of the second access network device.

For example, the terminal device sends the first signal to the first access network device and the second access network device at a moment t1. The first access network device and the second access network device separately receive a signal from the terminal device, and forward the signal to the third access network device. The third access network device detects the signal to determine that the signal is the first signal. The third access network device determines receive time t7 at which the third access network device receives the first signal through the first access network device and the first location $s_1$ of the first access network device at a moment t2. In this case, t7 includes $T_1$ in the first delay, and t2 is a difference between t7 and $T_1$. The third access network device further determines receive time t9 at which the third access network device receives the first signal through the second access network device and the third location $L_1$ of the second access network device at a moment t5. In this case, t9 includes $T_3$ in the second delay, and t5 is a difference between t9 and $T_3$. The terminal device sends the second signal to the first access network device and the second access network device at a moment t3 after the first transmit time difference $\Delta$ since the terminal device sends the first signal. The first access network device and the second access network device separately receive a signal from the terminal device, and forward the signal to the third access network device. The third access network device detects the signal to determine that the signal is the second signal. The third access network device determines receive time t8 at which the third access network device receives the second signal through the first access network device and the second location $s_2$ of the first access network device at a moment t4. In this case, t8 includes $T_2$ in the first delay, and t4 is a difference between t8 and $T_2$. The third access network device further determines receive time t10 at which the third access network device receives the second signal through the second access network device and the fourth location $L_2$ of the second access network device at a moment t6. In this case, t10 includes $T_4$ in the second delay, and t6 is a difference between t10 and $T_4$. The third access network device determines the location u of the terminal device according to Formula (7).

Optionally, based on $u$(x, y, z) mentioned above, when one value of x, y, and z is known, unknown values may be determined according to Formula (7), to determine the location of the terminal device.

Optionally, based on $u$(x, y, z) mentioned above, when none of three values is known, the terminal device may further send at least one third signal of the first type to the first access network device and the second access network device. The third access network device lists, based on a relationship (for example, a receive time difference, a transmit time difference, or a location of the access network device) between every two of the first signal, the second signal, and the at least one third signal, at least three equations similar to Formula (7), and separately resolves x, y, and z, to determine the location of the terminal device.

In another possible implementation, when the location of the terminal device is determined through a plurality of access network devices, and both the first access network device and the second access network device are configured only for transparent forwarding (for example, in the scenario shown in FIG. 7), if the first timing advance is different from the second timing advance, the third access network device may determine the location of terminal device based on a second parameter and the advance difference. Alternatively, the third access network device may determine the location of the terminal device based on a second parameter. The second parameter includes the third receive time difference, the first transmit time difference, the first location of the first access network device, the second location of the first access network device, a fourth receive time difference, the third location of the second access network device, the fourth location of the second access network device, a first delay, and a second delay.

Optionally, when the third access network device determines the location of the terminal device based on the second parameter and the advance difference, the third receive time difference, the first transmit time difference, the first location of the first access network device, the second location of the first access network device, the fourth receive time difference, the third location of the second access network device, the fourth location of the second access network device, the first delay, the second delay, the advance difference, and the location of the terminal device satisfy Formula (8-1) and Formula (8-2):

$$\Delta_3 - \Delta - (T_2 - T_1) - (TA_2 - TA_1) = \|s_2 - u\| \div c - \|s_1 - u\| \div c \quad \text{Formula (8-1)};$$

and

$$\Delta_4 - \Delta - (T_4 - T_3) - (TA_2 - TA_1) = \|\boldsymbol{L}_2 - \boldsymbol{u}\| \div c - \|\boldsymbol{L}_1 - \boldsymbol{u}\| \div c \qquad \text{Formula (8-2)}.$$

$\Delta_3$ represents the third receive time difference, $\Delta_4$ represents the fourth receive time difference, $\Delta$ represents the first transmit time difference, $T_1$ represents a transmission delay of the first signal between the first access network device and the third access network device, $T_2$ represents a transmission delay of the second signal between the first access network device and the third access network device, $T_3$ represents a transmission delay of the first signal between the second access network device and the third access network device, $T_4$ represents a transmission delay of the second signal between the second access network device and the third access network device, $\boldsymbol{s}_1$ represents the first location of the first access network device, $\boldsymbol{s}_2$ represents the second location of the first access network device, $\boldsymbol{u}$ represents the location of the terminal device, c represents the speed of light, $\boldsymbol{L}_1$ represents the third location of the second access network device, $\boldsymbol{L}_2$ represents the fourth location of the second access network device, $TA_1$ represents the first timing advance, and $TA_2$ represents the second timing advance.

Optionally, based on $u$(x, y, z) mentioned above, when one value of x, y, and z is known, unknown values may be determined according to Formula (8-1) and Formula (8-2), to determine the location of the terminal device.

Optionally, based on $u$(x, y, z) mentioned above, when none of three values is known, the terminal device may further send at least one third signal of the first type to the first access network device and the second access network device. The first access network device lists, based on a relationship (for example, a receive time difference, a transmit time difference, or a location of the access network device) between every two of the first signal, the second signal, and the at least one third signal, at least three equations similar to Formula (8-1) and/or Formula (8-2), and separately resolves x, y, and z, to determine the location of the terminal device.

Optionally, when the third access network device determines the location of the terminal device based on the second parameter and the advance difference, the third receive time difference, the first transmit time difference, the first location of the first access network device, the second location of the first access network device, the fourth receive time difference, the third location of the second access network device, the fourth location of the second access network device, the first delay, the second delay, and the location of the terminal device satisfy Formula (8-3):

$$\Delta_4 - \Delta_3 - (T_4 - T_3) + (T_2 - T_1) = \|\boldsymbol{L}_2 - \boldsymbol{u}\| \div c - \|\boldsymbol{L}_1 - \boldsymbol{u}\| \div c - \|\boldsymbol{s}_2 - \boldsymbol{u}\| \div c +$$

$$\|\boldsymbol{s}_1 - \boldsymbol{u}\| \div c \qquad \text{Formula (8-3)}.$$

$\Delta_3$ represents the third receive time difference, $\Delta_4$ represents the fourth receive time difference, $\Delta$ represents the first transmit time difference, $T_1$ represents a transmission delay of the first signal between the first access network device and the third access network device, $T_2$ represents a transmission delay of the second signal between the first access network device and the third access network device, $T_3$ represents a transmission delay of the first signal between the second access network device and the third access network device, $T_4$ represents a transmission delay of the second signal between the second access network device and the third access network device, $\boldsymbol{s}_1$ represents the first location of the first access network device, $\boldsymbol{s}_2$ represents the second location of the first access network device, $\boldsymbol{u}$ represents the location of the terminal device, $c$ represents the speed of light, $\boldsymbol{L}_1$ represents the third location of the second access network device, and $\boldsymbol{L}_2$ represents the fourth location of the second access network device.

Optionally, based on $u$(x, y, z) mentioned above, when two values of x, y, and z are known, an unknown value may be determined according to Formula (8-3), to determine the location of the terminal device.

Optionally, based on $u$(x, y, z) mentioned above, when none of three values is known, the terminal device may further send at least two third signals of the first type to the first access network device and the second access network device. The first access network device lists, based on a relationship (for example, a receive time difference, a transmit time difference, or a location of the access network device) between every two of the first signal, the second signal, and the at least two third signals, at least three equations similar to Formula (8-3), and separately resolves x, y, and z, to determine the location of the terminal device.

Alternatively, the terminal device may further send at least one third signal of the first type to the first access network device and the second access network device. The first access network device lists, based on a relationship (for example, a receive time difference, a transmit time difference, or a location of the access network device) between every two of the first signal, the second signal, and the at least one third signal, at least one equation similar to Formula (8-3) and at least three equations similar to Formula (8-1) and/or Formula (8-2), and separately resolves x, y, and z, to determine the location of the terminal device.

It should be noted that the foregoing examples in embodiments of this application are described only for a case in which the type of the first signal is the same as the type of the second signal. Actually, in embodiments of this application, the type of the first signal may be different from the type of the second signal. For example, the first signal may be an SRS, and the second signal may be a DMRS. A process of positioning the terminal device when the type of the first signal is different from the type of the second signal is similar to the process of positioning the terminal device when the type of the first signal is the same as the type of the second signal. Details are not described in this application.

It may be understood that, in the foregoing embodiments, the methods and/or the steps implemented by the first access network device may be implemented by a component (for example, a processor, a chip, a chip system, a circuit, a logical module, or software such as a chip or a circuit) that can be used in the first access network device; or the methods and/or the steps implemented by the terminal device may be implemented by a component (for example, a processor, a chip, a chip system, a circuit, a logical module, or software such as a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the first access network device in the foregoing method embodiments, an apparatus including the first access network device, or a component that can be used in the first access network device, for example, a chip or a chip system. Alternatively, the communication apparatus may be the terminal device in the foregoing method embodiments, an apparatus including the terminal device, or a component that can be used in the terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

Optionally, FIG. 16 is a diagram of a structure of a communication apparatus 160. The communication apparatus 160 includes a processing module 1601 and a transceiver module 1602. The communication apparatus 160 may be configured to implement a function of the first access network device or the terminal device.

In some embodiments, the communication apparatus 160 may further include a storage module (not shown in FIG. 16), configured to store program instructions and data. In some embodiments, the transceiver module 1602 may also be referred to as a transceiver unit, and is configured to implement a sending function and/or a receiving function. The transceiver module 1602 may include a transceiver circuit, a transceiver machine, a transceiver, or a communication interface.

In some embodiments, the transceiver module 1602 may include a receiving module and a sending module, respectively configured to perform receiving steps and sending steps performed by the terminal device or the first access network device in the foregoing method embodiments, and/or configured to support another process of the technology described in this specification. The processing module 1601 may be configured to perform processing (for example, determining and generating) steps performed by the terminal device or the first access network device in the foregoing method embodiments, and/or configured to support another process of the technology described in this specification.

When the communication apparatus 160 is configured to implement a function of the first access network device: In a possible implementation, the transceiver module 1602 is configured to receive a first signal and a second signal from the terminal device. The processing module 1601 is configured to determine a location of the terminal device based on a first receive time difference, a first transmit time difference, and a first location and a second location of the first access network device, where the first receive time difference is a time difference between receive time of the first signal and receive time of the second signal, the first transmit time difference is a time difference between transmit time of the first signal and transmit time of the second signal, the first location of the first access network device is a location at which the first access network device is located when receiving the first signal, and the second location of the first access network device is a location at which the first access network device is located when receiving the second signal.

Optionally, a timing advance corresponding to the first signal is a first timing advance, a timing advance corresponding to the second signal is a second timing advance, and the first timing advance is the same as the second timing advance.

Optionally, a timing advance corresponding to the first signal is a first timing advance, a timing advance corresponding to the second signal is a second timing advance, and the first timing advance is different from the second timing advance.

Optionally, the first signal and the second signal are of a same type or different types.

Optionally, the type of the first signal and/or the second signal includes but is not limited to an SRS, a DMRS, or a preamble.

Optionally, when the first signal is a preamble, the preamble may be a random access preamble in a random access procedure.

Optionally, the transceiver module 1602 is further configured to receive a time difference between the transmit time of the first signal and the second signal that are from the terminal device.

Optionally, the transceiver module 1602 is further configured to receive time indication information, and a third location and a fourth location of a second access network device from the second access network device. The time indication information indicates a second receive time difference, and the second receive time difference is a time difference between time at which the second access network device receives the first signal and time at which the second access network device receives the second signal. The third location of the second access network device is a location at which the second access network device is located when receiving the first signal, and the fourth location of the second access network device is a location at which the second access network device is located when receiving the second signal.

Optionally, the transceiver module 1602 is further configured to send related information of the terminal device to the second access network device. The related information is used to determine a receive time window of the first signal and a receive time window of the second signal.

Optionally, the related information includes at least one of resource information, identification information of a cell in which the terminal device is located, or type information of the first signal and the second signal, where the resource information indicates a time-frequency resource on which the first signal is located and/or a time-frequency resource on which the second signal is located.

Optionally, the transceiver module 1602 is further configured to send the first indication information to the terminal device. The first indication information indicates the first timing advance and/or the second timing advance.

Optionally, that the first indication information indicates the first timing advance and/or the second timing advance may include: The first indication information indicates that the first timing advance is the same as or different from the second timing advance.

Optionally, that the first indication information indicates the first timing advance and/or the second timing advance may further include: The first indication information indicates a value of the first timing advance and a value of the second timing advance.

Optionally, when the first signal is a random access preamble in a random access procedure, the first indication information may indicate that a timing advance corresponding to a sending moment of the first signal of the terminal device is used as the first timing advance.

Optionally, the first indication information may be carried in DCI, a MAC-CE, and/or an RRC message.

Optionally, the transceiver module 1602 is further configured to send an advance difference to the first access network device. The advance difference is a difference between the first timing advance and the second timing advance.

Optionally, the processing module 1601 is further configured to determine the advance difference based on the first signal and the second signal. The second signal is a signal obtained by performing cyclic shift on the first signal.

Optionally, the processing module 1601 is further configured to determine a step size of the cyclic shift based on the first signal and the second signal, and determine the advance difference based on the step size.

Optionally, the processing module 1601 is further configured to determine the location of the terminal device based on the first receive time difference, the first transmit time difference, the first location of the first access network device, the second location of the first access network device, and the advance difference. The advance difference is a difference between the first timing advance and the second timing advance.

Optionally, the processing module 1601 is further configured to determine the location of the terminal device based on the first receive time difference, the first transmit time difference, the first location of the first access network device, the second location of the first access network device, the second receive time difference, the third location of the second access network device, and the fourth location of the second access network device.

Optionally, the processing module 1601 is further configured to determine the location of the terminal device based on the first receive time difference, the first transmit time difference, the first location of the first access network device, the second location of the first access network device, the second receive time difference, the third location of the second access network device, the fourth location of the second access network device, and the advance difference.

When the communication apparatus 160 is configured to implement a function of the terminal device:

In a possible implementation, the processing module 1601 is configured to generate the first signal and the second signal.

The transceiver module 1602 is configured to send the first signal to the first access network device by using the first timing advance. The transceiver module 1602 is further configured to send a second signal to the first access network device by using a second timing advance, where the first signal and the second signal are used to determine a location of the terminal device.

Optionally, the first timing advance may be the same as the second timing advance.

Optionally, the first timing advance may be different from the second timing advance.

Optionally, the first signal and the second signal are of a same type or different types.

Optionally, the type of the first signal and/or the second signal includes but is not limited to an SRS, a DMRS, or a preamble.

For example, the preamble may be a random access preamble in a random access procedure.

Optionally, when the first signal is a random access preamble, the terminal device may send a time difference between the transmit time of the first signal and the transmit time of the second signal to the first access network device.

Optionally, the processing module 1601 is further configured to send, through the transceiver module 1602, an advance difference to the first access network device, where the advance difference is a difference between the first timing advance and the second timing advance.

Optionally, the processing module 1601 is further configured to perform cyclic shift on the first signal based on the advance difference, to obtain the second signal. That is, the second signal is a signal obtained by performing cyclic shift on the first signal.

Optionally, the processing module 1601 is further configured to send, through the transceiver module 1602, the first signal to a second access network device by using the first timing advance; and send the second signal to the second access network device by using the second timing advance. Actually, the terminal device sends the first signal only once, and sends the second signal only once.

All related content of the steps in the foregoing method embodiments may be cited in function descriptions of the corresponding functional modules. Details are not described herein again.

In this application, the communication apparatus 160 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in hardware implementation, a person skilled in the art may figure out that the communication apparatus 160 may be in a form of the communication apparatus 100 shown in FIG. 10.

In an example, functions/implementation processes of the processing module 1601 in FIG. 16 may be implemented by the processor 1001 in the communication apparatus 100 shown in FIG. 10 by invoking the computer-executable instructions stored in the memory 1003. Functions/implementation processes of the transceiver module 1602 in FIG. 16 may be implemented by the communication interface 1004 in the communication apparatus 100 shown in FIG. 10.

In some embodiments, when the communication apparatus 160 in FIG. 16 is a chip or a chip system, a function/implementation process of the transceiver module 1602 may be implemented by using an input/output interface (or a communication interface) of the chip or the chip system, and a function/implementation process of the processing module 1601 may be implemented by using a processor (or a processing circuit) of the chip or the chip system.

The communication apparatus 160 provided in this embodiment may perform the foregoing method. Therefore, for technical effects that can be achieved by the communication apparatus 160, refer to the foregoing method embodiments. Details are not described herein again.

As a possible product form, the communication apparatus in this embodiment of this application may alternatively be implemented by using the following: one or more field programmable gate arrays (field programmable gate array, FPGA), a programmable logic device (programmable logic device, PLD), a controller, a state machine, gate logic, and a discrete hardware component, any other proper circuit, or any combination of circuits that can perform various functions described throughout this application.

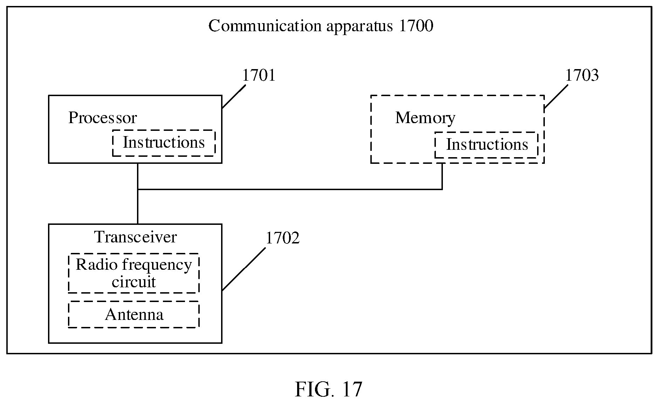

As another possible product form, the communication apparatus described in this embodiment of this application may be implemented by using a general bus architecture. For ease of description, FIG. 17 is a diagram of a structure of a communication apparatus 1700 according to an embodiment of this application. The communication apparatus 1700 includes a processor 1701 and a transceiver 1702. The communication apparatus 1700 may be a terminal device, or a chip or a module in the terminal device. FIG. 17 shows only main components in the communication apparatus 1700. In addition to the processor 1701 and the transceiver 1702, the communication apparatus may further include a memory 1703.

Optionally, the processor 1701 is mainly configured to process a communication protocol and communication data, control the entire communication apparatus, execute a software program, and process data of the software program. The memory 1703 is mainly configured to store the software program and the data. The transceiver 1702 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave.

Optionally, the processor 1701, the transceiver 1702, and the memory 1703 may be connected through a communication bus.

After the communication apparatus is powered on, the processor 1701 may read the software program in the memory 1703, interpret and execute instructions of the software program, and process the data of the software program.

When data needs to be sent wirelessly, the processor 1701 performs baseband processing on the to-be-sent data, and then outputs a baseband signal to a radio frequency circuit. The radio frequency circuit performs radio frequency processing on the baseband signal, and then sends a radio frequency signal to the outside in a form of electromagnetic wave through the antenna. When data is to be sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to indicate the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions of any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, that is, may be located in one place, or may be distributed on a plurality of network units. Components displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1.  A positioning method, wherein the method comprises:

    receiving a first signal and a second signal from a terminal device; and
    determining a location of the terminal device based on a first receive time difference, a first transmit time difference, and a first location and a second location of a first access network device, wherein
    the first receive time difference is a time difference between receive time of the first signal and receive time of the second signal, the first transmit time difference is a time difference between transmit time of the first signal and transmit time of the second signal, the first location of the first access network device is a location at which the first access network device is located when receiving the first signal, and the second location of the first access network device is a location at which the first access network device is located when receiving the second signal.

2.  The method according to claim 1, wherein a timing advance corresponding to the first signal is a first timing advance, a timing advance corresponding to the second signal is a second timing advance, and the first timing advance is the same as the second timing advance.

3.  The method according to claim 1, wherein a timing advance corresponding to the first signal is a first timing advance, a timing advance corresponding to the second signal is a second timing advance, and the first timing advance is different from the second timing advance.

4.  The method according to claim 3, wherein determining the location of the terminal device based on the first receive time difference, the first transmit time difference, and the first location and the second location of the access network device comprises:
    determining the location of the terminal device based on the first receive time difference, the first transmit time difference, the first location of the access network device, the second location of the first access network device, and an advance difference, wherein the advance difference is a difference between the first timing advance and the second timing advance.

5.  The method according to claim 4, wherein the method further comprises:
    receiving the advance difference from the terminal device.

6.  The method according to claim 4, wherein the second signal is a signal obtained by performing cyclic shift on the first signal, and the method further comprises:
    determining a step size of the cyclic shift, and determining the advance difference based on the step size.

7. The method according to any one of claims 1 to 6, wherein determining the location of the terminal device based on the first receive time difference, the first transmit time difference, and the first location and the second location of the first access network device comprises:

   receiving time indication information, and a third location and a fourth location of a second access network device from the second access network device, wherein the time indication information indicates a second receive time difference, the second receive time difference is a time difference between time at which the second access network device receives the first signal and time at which the second access network device receives the second signal, the third location of the second access network device is a location at which the second access network device is located when receiving the first signal, and the fourth location of the second access network device is a location at which the second access network device is located when receiving the second signal; and
   determining the location of the terminal device based on the first receive time difference, the first transmit time difference, the first location of the first access network device, the second location of the first access network device, the second receive time difference, the third location of the second access network device, and the fourth location of the second access network device.

8. The method according to claim 7, wherein before receiving, from the second access network device, the time indication information, and the third location and the fourth location of the second access network device, the method further comprises:
   sending related information of the terminal device to the second access network device, wherein the related information is used to determine a receive time window of the first signal and a receive time window of the second signal.

9. The method according to claim 8, wherein the related information comprises at least one of resource information, identification information of a cell in which the terminal device is located, or type information of the first signal and the second signal, wherein the resource information indicates a time-frequency resource on which the first signal is located and/or a time-frequency resource on which the second signal is located.

10. The method according to any one of claims 7 to 9, wherein the time indication information comprises the second receive time difference; or
    the time indication information comprises the time at which the second access network device receives the first signal and the time at which the second access network device receives the second signal.

11. The method according to any one of claims 1 to 10, wherein the first signal comprises a sounding reference signal, a demodulation reference signal, or a preamble.

12. The method according to any one of claims 1 to 10, wherein the first signal is a random access preamble in a random access procedure.

13. A positioning method, wherein the method comprises:

    sending a first signal to a first access network device by using a first timing advance; and
    sending a second signal to the first access network device by using a second timing advance, wherein the first signal and the second signal are used to determine a location of the terminal device.

14. The method according to claim 13, wherein the first timing advance is the same as the second timing advance.

15. The method according to claim 13, wherein the first timing advance is different from the second timing advance.

16. The method according to any one of claims 13 to 15, wherein the method further comprises:
    sending an advance difference to the first access network device, wherein the advance difference is a difference between the first timing advance and the second timing advance.

17. The method according to any one of claims 13 to 15, wherein the second signal is a signal obtained by performing cyclic shift on the first signal.

18. The method according to any one of claims 13 to 17, wherein the method further comprises:

sending the first signal to a second access network device by using the first timing advance; and
sending the second signal to the second access network device by using the second timing advance.

19. The method according to any one of claims 13 to 18, wherein the first signal comprises a sounding reference signal, a demodulation reference signal, or a preamble.

20. The method according to any one of claims 13 to 18, wherein the first signal is a random access preamble in a random access procedure.

21. A communication apparatus, wherein the communication apparatus comprises a processor, and the processor is configured to run a computer program or instructions, to enable the communication apparatus to perform the method according to any one of claims 1 to 12 or the method according to any one of claims 13 to 20.

22. A computer-readable storage medium, wherein the computer-readable storage medium stores computer instructions or a computer program, and when the computer instructions or the computer program is run on a computer, the method according to any one of claims 1 to 12 or the method according to any one of claims 13 to 20 is performed.

23. A communication system, wherein the communication system comprises a terminal device and a network device, the terminal device is configured to implement the method according to any one of claims 13 to 20, and the network device is configured to implement the method according to any one of claims 1 to 12.

Base
station 1

Base
station 2

Base
station 3

Base
station 4

SRS

SRS

SRS

SRS

Terminal
device

FIG. 1

FIG. 2

FIG. 3

Location
2

Communication
satellite

SRS | PRS

Location
1

Location
3

Communication
satellite

PRS
SRS

PRS
SRS

Communication
satellite

Terminal
device

FIG. 4

Location
2

Communication
satellite

TA

Location
1

Location
3

Communication
satellite

TA

TA

Communication
satellite

TA

Terminal
device

FIG. 5

FIG. 6

FIG. 7

Terminal device — Air interface — Flight platform or satellite — First access network device 602 — Terrestrial station — Core network — Data network

Xn interface

Terminal device — Air interface — Flight platform or satellite — Second access network device 603

FIG. 8

Terminal device · Air interface · Flight platform or satellite · First access network device 602 · IAB-donor · Terrestrial station · Core network · Data network

Terminal device · Air interface · Flight platform or satellite · Second access network device 603 · IAB-node

(a)

IAB donor: Donor-CU ↔ Donor-DU

IAB node: IAB-MT · IAB-DU

IAB node: IAB-MT · IAB-DU

(b)

FIG. 9

EP 4 626 043 A1

100

1001          1003

Processor

CPU 0

Memory

CPU 1

Communication bus
1002

1004          1005          1006

Communication
interface

Output device

Input device

## FIG. 10

Terminal device

First access
network device

S1101: First signal and second signal

S1102: Determine a location of the terminal device based on a first receive
time difference, a first transmit time difference, and a first location and a
second location of the first access network device, where the first receive
time difference is a time difference between receive time of the first signal
and receive time of the second signal; the first transmit time difference is a
time difference between transmit time of the first signal and transmit time
of the second signal; the first location of the first access network device is
a location at which the first access network device is located when
receiving the first signal; and the second location of the first access
network device is a location at which the first access network device is
located when receiving the second signal

## FIG. 11

First receive time
difference

First access
network
device

t2

t4

Message
3

Second
signal

Message
1

(First
signal)

Message
2

Message
4

t1

t3

Terminal
device

First transmit time
difference

FIG. 12

| Terminal device | First access network device | Second access network device |

S1104: Related information of
the terminal device

S1101: First signal and second signal

S1103: Time indication
information, and a third location
and a fourth location of the second
access network device

S1102: Determine a location of the terminal device based
on a first receive time difference, a first transmit time
difference, a first location of the first access network
device, a second location of the first access network
device, a second receive time difference, the third
location of the second access network device, and the
fourth location of the second access network device

FIG. 13a

Terminal device

First access network device

S1105: First indication information

S1107: Perform cyclic shift on a first signal based on an advance difference, to obtain a second signal

S1101: First signal and second signal

S1106: Advance difference

S1102: Determine a location of the terminal device based on a first receive time difference, a first transmit time difference, and a first location and a second location of the first access network device

FIG. 13b

First access network device

First receive time difference

t2

t4

First signal

Second signal

Terminal device

t1

t3

First transmit time difference

FIG. 14

Second receive time
difference

Second access
network
device

t5

t6

First receive
time difference

First access
network
device

t2

t4

First
signal

Second
signal

Terminal
device

t1

t3

First transmit
time difference

FIG. 15

Communication apparatus    160

Processing module    1601

Transceiver module    1602

FIG. 16

Communication apparatus 1700

1701

Processor

Instructions

1703

Memory

Instructions

Transceiver

1702

Radio frequency circuit

Antenna

FIG. 17

**INTERNATIONAL SEARCH REPORT**

| International application No. |
|---|
| **PCT/CN2023/138929** |

### A. CLASSIFICATION OF SUBJECT MATTER

H04W4/029(2018.01)i

According to International Patent Classification (IPC) or to both national classification and IPC

### B. FIELDS SEARCHED

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

3GPP, CNTXT, ENTXTC, DWPI, WPABS: 定位, 基站, 接入网, 第一, 第二, 发送, 接收, 时间, 差, 位置, 定时提前, 卫星, 非地面网络, position, BS, base station, access, network, first, second, transmit, receive, difference, timing, time, advance, s1, s2, t1, t2, t3, t4, ta1, ta2, satellite, NTN

### C. DOCUMENTS CONSIDERED TO BE RELEVANT

| Category* | Citation of document, with indication, where appropriate, of the relevant passages | Relevant to claim No. |
|---|---|---|
| X | US 2020249311 A1 (HERE GLOBAL B.V.) 06 August 2020 (2020-08-06) description, paragraphs [0134]-[0155] and [0178] | 13-22 |
| A | CN 115053541 A (QUALCOMM INC.) 13 September 2022 (2022-09-13) description, paragraphs [0080]-[0089] | 1-12, 21-23 |
| A | CN 108401225 A (TSINGOAL (BEIJING) TECHNOLOGY CO., LTD.) 14 August 2018 (2018-08-14) entire document | 1-23 |
| A | CN 109906643 A (TELEFONAKTIEBOLAGET LM ERICSSON (PUBL)) 18 June 2019 (2019-06-18) entire document | 1-23 |
| A | CN 114095855 A (HUAWEI TECHNOLOGIES CO., LTD.) 25 February 2022 (2022-02-25) entire document | 1-23 |
| A | CN 115087097 A (SHENZHEN AI-LINK NETWORK CO., LTD.) 20 September 2022 (2022-09-20) entire document | 1-23 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 February 2024** | **04 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 626 043 A1

**INTERNATIONAL SEARCH REPORT**

| International application No. |
|---|
| **PCT/CN2023/138929** |

**C.    DOCUMENTS CONSIDERED TO BE RELEVANT**

| Category* | Citation of document, with indication, where appropriate, of the relevant passages | Relevant to claim No. |
|---|---|---|
| A | CN 115150931 A (HUAWEI TECHNOLOGIES CO., LTD.) 04 October 2022 (2022-10-04) entire document | 1-23 |
| A | HUAWEI et al. "R1-2007569,Discussion on timing relationship enhancements for NTN" *3GPP TSG RAN WG1 Meeting #103-e,* 13 November 2020 (2020-11-13), entire document | 1-23 |

Form PCT/ISA/210 (second sheet) (July 2022)

44

## INTERNATIONAL SEARCH REPORT
### Information on patent family members

International application No.

**PCT/CN2023/138929**

| Patent document cited in search report | | | Publication date (day/month/year) | Patent family member(s) | | | Publication date (day/month/year) |
|---|---|---|---|---|---|---|---|
| US | 2020249311 | A1 | 06 August 2020 | EP | 3693754 | A1 | 12 August 2020 |
| CN | 115053541 | A | 13 September 2022 | WO | 2021155578 | A1 | 12 August 2021 |
| | | | | KR | 20220139310 | A | 14 October 2022 |
| | | | | EP | 4101185 | A1 | 14 December 2022 |
| | | | | US | 2023051054 | A1 | 16 February 2023 |
| | | | | JP | 2023518658 | A | 08 May 2023 |
| CN | 108401225 | A | 14 August 2018 | None | | | |
| CN | 109906643 | A | 18 June 2019 | BR | 112019008796 | A2 | 16 July 2019 |
| | | | | US | 2019268872 | A1 | 29 August 2019 |
| | | | | EP | 3536065 | A1 | 11 September 2019 |
| | | | | WO | 2018084794 | A1 | 11 May 2018 |
| CN | 114095855 | A | 25 February 2022 | None | | | |
| CN | 115087097 | A | 20 September 2022 | None | | | |
| CN | 115150931 | A | 04 October 2022 | WO | 2022206657 | A1 | 06 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211613780